(19) **Europäisches Patentamt / European Patent Office / Office européen des brevets**

(11) **EP 4 787 914 A1**

(12) **EUROPEAN PATENT APPLICATION**
published in accordance with Art. 153(4) EPC

(43) Date of publication:
05.08.2026 Bulletin 2026/32

(21) Application number: 24871865.2

(22) Date of filing: 11.09.2024

(51) International Patent Classification (IPC):
$H04W\ 8/20^{(2009.01)}$ $\qquad$ $H04W\ 28/24^{(2009.01)}$
$H04W\ 72/231^{(2023.01)}$

(52) Cooperative Patent Classification (CPC):
H04W 8/20; H04W 28/24; H04W 72/231

(86) International application number:
PCT/JP2024/032569

(87) International publication number:
WO 2025/070068 (03.04.2025 Gazette 2025/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.09.2023 JP 2023167838

(71) Applicant: **DENSO CORPORATION**
**Kariya-city, Aichi 448-8661 (JP)**

(72) Inventor: **NAGANO, Tatsuki**
**Kariya- city, Aichi 4488661 (JP)**

(74) Representative: **TBK**
**Bavariaring 4-6**
**80336 München (DE)**

(54) **TERMINAL DEVICE, METHOD FOR TERMINAL DEVICE, AND BASE STATION DEVICE**

(57) A terminal apparatus (10) is configured to transmit, to a base station apparatus (20), a user equipment assistance information (UAI) message including assistance information related to a protocol data unit set importance (PSI) per quality of service (QoS) flow, and receive, from the base station apparatus, a radio resource control (RRC) message including information indicating a discard timer used for PSI-based discard processing.

Fig. 27

## Description

Cross-Reference To Related Application

The present application is based on and claims the benefit of priority to Japanese Patent Application No. 2023-167838 filed on September 28, 2023, the contents of which are incorporated herein by reference in its entirety.

Technical Field

The present disclosure relates to a terminal apparatus, a method of a terminal apparatus, and a base station apparatus.

Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

In NPL 1, implementation of XR in Fifth Generation New Radio (5G NR) being radio specifications defined by the Third Generation Partnership Project (3GPP (trademark)) is studied.

Citation List

Non Patent Literature

[NPL 1] 3GPP TR 38.838 V17.0.0 (2021-12)
[NPL 2] 3GPP TS 26.522 V0.1.0 (2023-05)

## SUMMARY

XR is operated under various requirements including a low latency requirement. Thus, for XR, communication between a terminal apparatus and a base station apparatus, taking account of a relative relation between a plurality of data segments, is proposed. For example, in NPL 2, a protocol data unit set importance (PSI) is defined. The PSI is associated with a PDU set and indicates the importance compared with other PDU sets within the same quality of service (QoS) flow. However, in existing technical specifications (TSs) including NPL 2, specific description has not been made on processing or procedure related to the PSI. The inventors found out an issue that the base station apparatus may fails to recognize information related to the PSI for uplink communication from the terminal apparatus. Note that the issue also occurs in a general terminal apparatus and a general base station apparatus other than those with XR implementation.

The present disclosure provides a technique that allows the terminal apparatus to notify the base station apparatus of information related to the PSI for uplink communication.

A terminal apparatus according to the present disclosure includes a transmitter configured to transmit, to a base station apparatus, a user equipment assistance information (UEAssistanceInformation (UAI)) message including assistance information related to a protocol data unit set importance (PSI) per quality of service (QoS) flow, and a receiver configured to receive, from the base station apparatus, a radio resource control (RRC) message including information for indicating a discard timer used for PSI-based discard processing, and a controller configured to perform the PSI-based discard processing based on the discard timer.

Further, a method of a terminal apparatus according to the present disclosure includes transmitting, to a base station apparatus, a user equipment assistance information (UEAssistanceInformation (UAI)) message including assistance information related to a protocol data unit set importance (PSI) per quality of service (QoS) flow, receiving, from the base station apparatus, a radio resource control (RRC) message including information for indicating a discard timer used for PSI-based discard processing, and performing the PSI-based discard processing based on the discard timer.

A base station apparatus according to the present disclosure includes a receiver configured to receive, from a terminal apparatus, a user equipment assistance information (UEAssistanceInformation (UAI)) message including assistance information related to a protocol data unit set importance (PSI) per quality of service (QoS) flow, and a transmitter configured to transmit, to the terminal apparatus, a radio resource control (RRC) message including information for indicating a discard timer used for PSI-based discard processing.

The configurations above enable, in a case where processing or procedure related to the PSI is activated for or applied to a terminal apparatus, the terminal apparatus to appropriately perform the processing. Note that the configurations above may exert, instead of or together with the above advantageous effects, other advantageous effects.

## BRIEF DESCRIPTION OF THE DRAWINGS

The above and other objects, features, and advantages of the present disclosure will become more apparent in the following detailed description with reference to the accompanying drawings. The drawings are as follows:

Fig. 1 is a diagram illustrating a communication system S;

Fig. 2 is a diagram illustrating a U-plane protocol stack;

Fig. 3 is a diagram illustrating a C-plane protocol stack;

Fig. 4 is a block diagram illustrating a schematic hardware configuration of a terminal apparatus 10;

Fig. 5 is a block diagram illustrating a schematic functional configuration of the terminal apparatus 10;

Fig. 6 is a block diagram illustrating a schematic hardware configuration of a base station apparatus 20;

Fig. 7 is a block diagram illustrating a schematic functional configuration of the base station apparatus 20;

Fig. 8 is a diagram illustrating a radio frame configuration;

Fig. 9 is a diagram illustrating a configuration of Short BSR;

Fig. 10 is a diagram illustrating a configuration of Long BSR;

Fig. 11 is a sequence diagram illustrating a process flow of the terminal apparatus 10 and the base station apparatus 20;

Fig. 12 is a diagram illustrating an example of a configuration of Long BSR including delay information;

Fig. 13 is a diagram illustrating another example of the configuration of Long BSR including the delay information;

Fig. 14 is a diagram illustrating another example of the configuration of Long BSR including the delay information;

Fig. 15 is a diagram for describing an example of first discard processing out of PSI-based discard processing;

Fig. 16 is a diagram for describing another example of the first discard processing;

Fig. 17 is a diagram for describing another example of the first discard processing;

Fig. 18 is a diagram for describing an example of second discard processing out of the PSI-based discard processing;

Fig. 19 is a diagram for describing another example of the second discard processing;

Fig. 20 is a diagram for describing a first aspect of processing of the terminal apparatus 10 in a case where the first discard processing is activated;

Fig. 21 is a diagram for describing a second aspect of the processing of the terminal apparatus 10 in the case where the first discard processing is activated;

Fig. 22 is a diagram for describing an example of triggering a delay information report by using a first threshold Th1 in the first aspect;

Fig. 23 is a diagram for describing an example of triggering the delay information report by using the first threshold Th1 in the second aspect;

Fig. 24 is a sequence diagram illustrating a process flow of the terminal apparatus 10 and the base station apparatus 20 according to a first embodiment;

Fig. 25 is a diagram for describing an example of triggering the delay information report by using a second threshold Th2 in the first aspect;

Fig. 26 is a diagram for describing an example of triggering the delay information report by using the second threshold Th2 in the second aspect; and

Fig. 27 is a sequence diagram illustrating a process flow of the terminal apparatus 10 and the base station apparatus 20 according to a second embodiment.

## DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed as long as the configurations are not inconsistent with each other.

1. Common Embodiment

Configurations common to a first embodiment and a second embodiment described later will be described.

1.1. Communication System

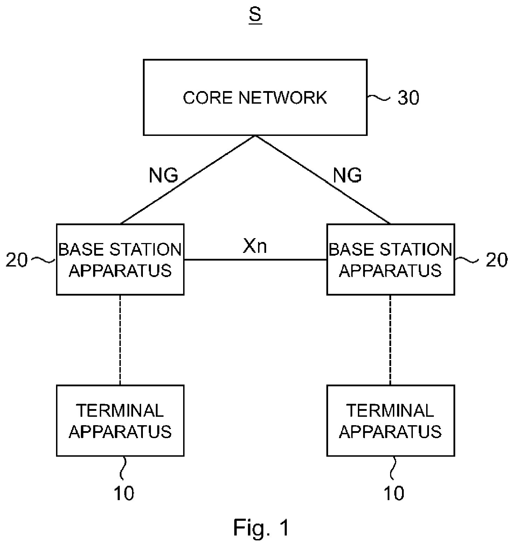

As illustrated in Fig. 1, a communication system S includes one or more terminal apparatuses 10, one or more base station apparatuses 20, and a core network 30. The communication system S is configured in accordance with certain technical specifications. For example, the communication system S may be compliant with technical specifications defined by 3GPP (for example, 5G, 5G advanced, 6G, or the like).

In the communication system S, a user plane in which user data is transmitted and received and a control plane in which control data is transmitted and received are separately configured. In other words, the communication system S supports C/U split. The user plane is abbreviated to the U plane, and the control plane is abbreviated to the C plane.

The terminal apparatus 10 may be a device that performs radio communication with the base station apparatus 20, and may be, for example, a user equipment (UE) that operates in accordance with 5G NR technical specifications of 3GPP. The terminal apparatus 10 may be an apparatus that is compliant with other older or newer 3GPP technical specifications.

The terminal apparatus 10 may be, for example, a mobile phone terminal such as a smartphone, a tablet terminal, a notebook PC, a communication module, a communication card, or an IoT device such as a surveillance camera and a robot. The terminal apparatus 10 may be a vehicle (for example, a car, a train, or the like), or an apparatus mounted on the vehicle. The terminal apparatus 10 may be a transport machine body other than the vehicle (for example, a ship, an airplane, or the like), or an apparatus mounted on the transport machine body. The terminal apparatus 10 may be a sensor, or an apparatus provided with the sensor. Note that the terminal apparatus 10 may be referred to as another name such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 is preferably an apparatus adapted to one or more of enhanced mobile broadband (eMBB), ultra-reliable and low-latency communications (URLLC), and massive machine type communications (mMTC).

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G NR technical specifications of 3GPP and connects to a 5G core network (5GC) of 3GPP, for example. The base station apparatus 20 may be an apparatus conforming to other older or newer technical specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

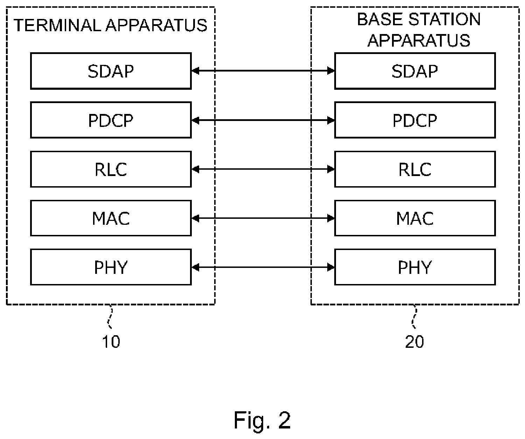

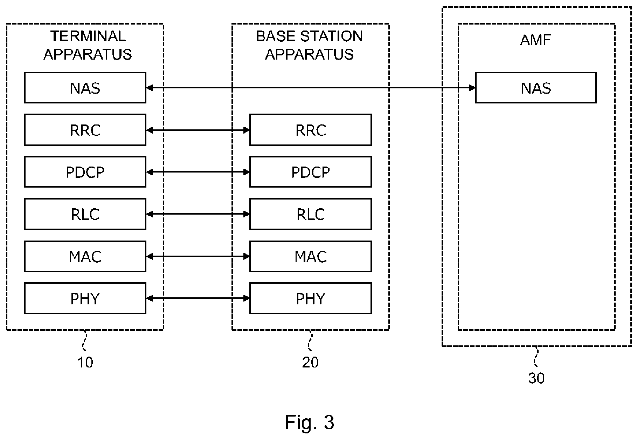

With reference to Fig. 2, a radio protocol architecture between the terminal apparatus 10 and the base station apparatus 20 will be described. With reference to Fig. 3, radio protocol architectures between the terminal apparatus 10 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side. The MAC layer is also referred to as "Medium Access Control layer."

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS).

The MAC layer is also referred to as "Medium Access Control layer." Each of the layers, except the Non-Access Stratum, is terminated in the base station apparatus 20 on the network side. The Non-Access Stratum is terminated in the AMF of the core network 30 on the network side.

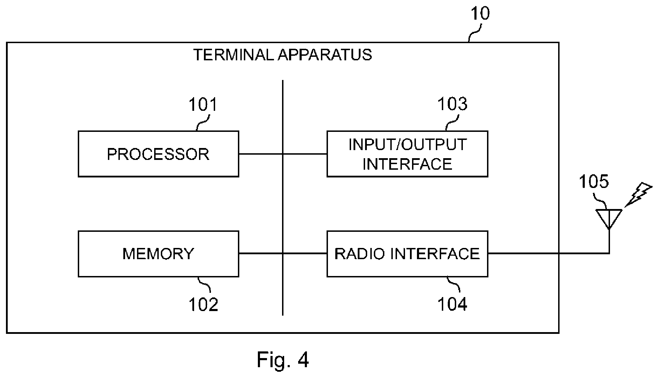

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user. The input/output interface 103 is a touch panel, for example.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

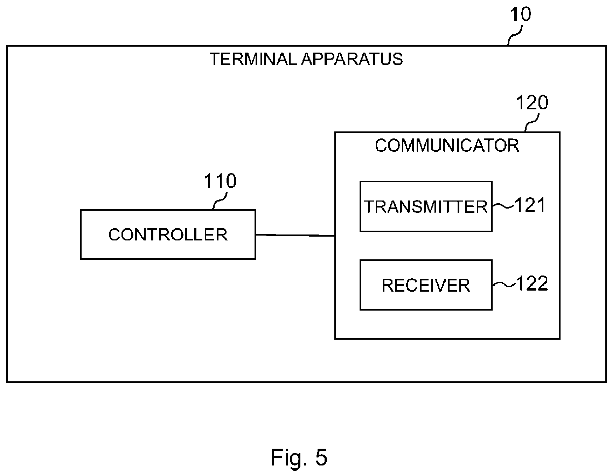

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120. In other words, the controller 110 performs, via the communicator 120, transmission/reception of data/information/message.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. The communicator 120 may include two or more radio interfaces 104 and two or more antennas 105.

When the controller 110 operates, the various types of processing of the terminal apparatus 10 are executed.

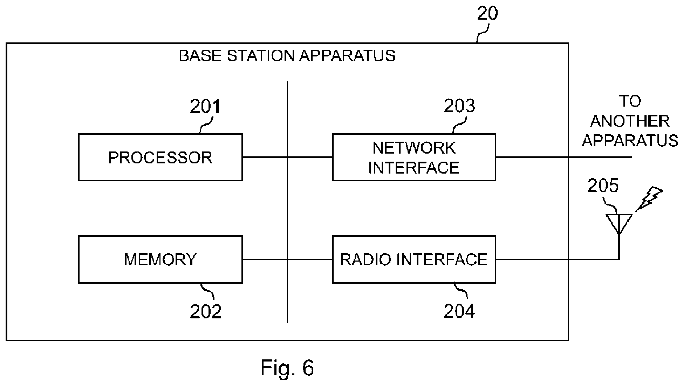

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the terminal apparatus 10 via the antenna 205.

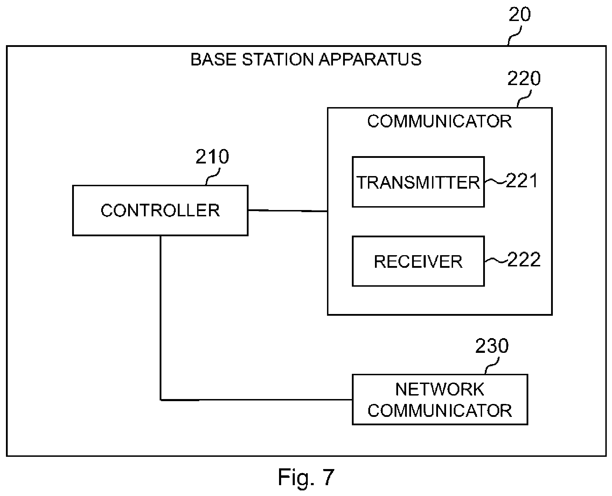

As illustrated in Fig. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. In other words, the controller 210 performs, via the communicator 220, transmission/reception of data/information/message. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. The communicator 220 may include two or more radio interfaces 204 and two or more antennas 205.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 are executed.

## 1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period (GP) for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) $\Delta f$ in the frequency domain. In the communication system S, a plurality of subcarrier spacings $\Delta f$ may be applied. The subcarrier spacing $\Delta f$ is expressed by the following expression, for example.

$$\Delta f = 2^{\mu} \cdot 15 \text{ [kHz]}$$

Here, $\mu$ is an integer of 0 or greater, and may be any one of values of 0, 1, 2, 3, 4, 5, and 6. Accordingly, the subcarrier spacing $\Delta f$ [kHz] may be any one of values of 15, 30, 60, 120, 240, 480, and 960. Note that $\mu$ may be a value of 7 or greater.

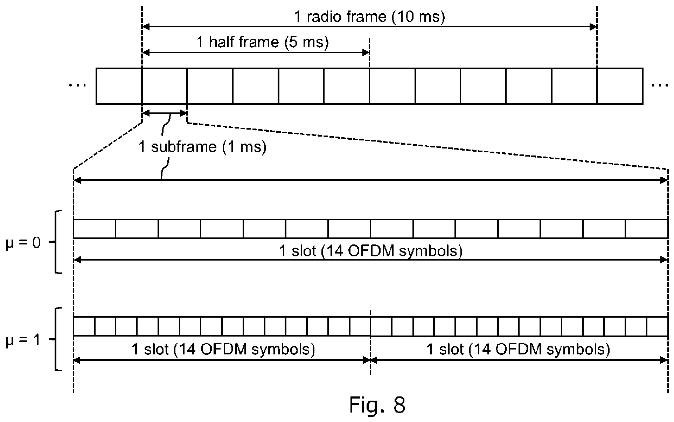

In the time domain of OFDM, as illustrated in Fig. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing $\Delta f$.

One subframe includes one or more slots. The number Ns of slots included in one subframe is dependent upon the value of $\mu$ described above, ultimately the subcarrier spacing $\Delta f$. The number Ns of slots is expressed by the following expression, for example.

$$\text{Ns} = 2^{\mu}$$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink common channel (DownLink Shared Channel, DL-SCH) and an uplink common channel (UpLink Shared Channel, UL-SCH). For example, data in downlink is also referred to as data of the DL-SCH. For example, data in uplink is also referred to as data of the UL-SCH. Here, the data of the DL-SCH includes user data in downlink. The data of the UL-SCH includes user data in uplink.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. Hereinafter, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

The terminal apparatus 10 may monitor (and/or receive) the PDCCH and detect (and/or receive) the DCI format.

The terminal apparatus 10 transmits, to the base station apparatus 20, uplink control information (UCI) by using a PUCCH being a physical channel.

The UCI includes control information such as a scheduling request (SR), an Ack/Nack in hybrid automatic repeat request (HARQ), and channel state information (CSI). The UCI is mapped to the PUCCH or the PUSCH, and corresponds to Layer 1 signaling.

The base station apparatus 20 transmits, to the terminal apparatus 10, a control element (CE) of a MAC layer by using a DL-SCH being a transport channel. The downlink MAC CE is mapped to a PDSCH via the DL-SCH, and corresponds to Layer 2 signaling.

The terminal apparatus 10 transmits, to the base station apparatus 20, a control element (CE) of a MAC layer by using a UL-SCH being a transport channel. The uplink MAC CE includes control information such as buffer status reporting (BSR). The uplink MAC CE is mapped to a PUSCH via the UL-SCH, and corresponds to Layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation, UAI) message will be described. The UAI message is an RRC message transmitted from the terminal apparatus 10 to the base station apparatus 20 using SRB1 or SRB3. The DCCH is used to transmit the UAI message. The UAI message is used to notify the base station apparatus 20 of various pieces of information (e.g., UE assistance information) related to the terminal apparatus 10.

1.4. Uplink Scheduling

1.4.1. Scheduling Request (SR)

An SR is used for the terminal apparatus 10 to request PUSCH radio resource allocation from the base station apparatus 20. An SR may be used for request of a UL-SCH resource for initial transmission. The base station apparatus 20 allocates, to the terminal apparatus 10, a PUCCH resource for transmission of the SR. The base station apparatus 20 transmits, to the terminal apparatus 10, an RRC message including a parameter for the SR. The parameter for the SR is included in an information element (IE) "SchedulingRequestResourceConfig" being an example of an IE for RRC.

The terminal apparatus 10 transmits, to the base station apparatus 20, UCI including the SR by using the configured PUCCH resource. The terminal apparatus 10 may transmit the UCI on demand. The terminal apparatus 10 may transmit the UCI with a configured periodicity. For example, the terminal apparatus 10 may transmit the SR set to "0" (negative SR) and/or the SR set to "1" (positive SR). In accordance with the SR, the base station apparatus 20 allocates a PUSCH radio resource to the terminal apparatus 10.

1.4.2. Dynamic Grant (DG)

A DG is a scheduling method of allocating a PUSCH radio resource in accordance with an uplink grant procedure. The base station apparatus 20 transmits, to the terminal apparatus 10, an uplink grant on a PDCCH. The terminal apparatus 10 performs transmission of a PUSCH in accordance with the uplink grant. For example, the base station apparatus 20 may allocate a PUSCH radio resource by using a C-RNTI and/or a DCI format with a CRC scrambled with an MCS-C-RNTI (i.e., DCI format used for scheduling of the PUSCH), and the terminal apparatus 10 may perform uplink transmission by using the PUSCH radio resource allocated. Here, a new data indicator to be included in the C-RNTI and/or the DCI format with the CRC scrambled with the MCS-C-RNTI may be set to 0 or 1. The base station apparatus 20 may allocate a PUSCH radio resource by using a DCI format with a CRC scrambled with a CS-RNTI (i.e., DCI format used for scheduling of the PUSCH), and the terminal apparatus 10 may perform uplink transmission by using the PUSCH radio resource allocated. A new data indicator to be included in the DCI format with the CRC scrambled with the CS-RNTI may be set to 1.

### 1.4.3. Configured Grant (CG)

A CG is a scheduling method of allocating a PUSCH radio resource without the dynamic uplink grant procedure. The CG includes two types, type 1 and type 2. The base station apparatus 20 transmits, to the terminal apparatus 10, an RRC message including a parameter for the CG. The parameter for the CG is included in an information element (IE) "ConfiguredGrantConfig" being an example of an IE for RRC. The IE "ConfiguredGrant-Config" includes a parameter "periodicity" related to a periodicity of transmission using a PUSCH. Note that the parameter "periodicity" is configured in units of the number of slots or number of symbols. Alternatively, the parameter "periodicity" may be configured in units of Frame Per Second (FPS). For type 1, the terminal apparatus 10 initiates transmission of a signal with a configured periodicity, without any trigger by DCI. In contrast, for type 2, the base station apparatus 20 transmits, to the terminal apparatus 10, DCI scrambled with a CS-RNTI. The CS-RNTI is used for activation of periodic transmission. In accordance with such activation by the DCI scrambled with the CS-RNTI, the terminal apparatus 10 initiates transmission using a PUSCH with a configured periodicity.

### 1.5. Buffer Status Report (Buffer Status Reporting (BSR))

The terminal apparatus 10 transmits, using an allocated PUSCH radio resource, a BSR by using MAC signaling. The BSR is configured with a MAC CE included in a medium access control protocol data unit (MAC PDU). The BSR indicates information related to a buffer status of uplink data of a MAC entity. Based on the BSR, the base station apparatus 20 performs radio resource allocation for uplink with respect to the terminal apparatus 10.

In the BSR, a logical channel (LCH) is allocated to a logical channel group (LCG). Each LCG includes one or more logical channels. The terminal apparatus 10 calculates, for each LCG, a buffer size of uplink data. The terminal apparatus 10 transmits, to the base station apparatus 20, the buffer size corresponding to each LCG as the BSR.

The base station apparatus 20 transmits, to the terminal apparatus 10, an RRC message including a parameter for the BSR. The parameter for the BSR is included in an information element (IE) "BSR-Config" being an example of an IE for RRC. For example, the IE "BSR-Config" includes three timers, "periodicBSR-Timer", "retxBSR-Timer", and "logicalChannelSR-Delay-Timer".

A parameter associated with an LCG is included in an information element (IE) "LogicalChannelConfig" being an example of an IE for RRC. In other words, the base station apparatus 20 may transmit an RRC message including the IE "LogicalChannelConfig". Based on the IE "LogicalChannelConfig" included in the RRC message, the terminal apparatus 10 may identify a configuration related to a logical channel and/or LCG. For example, the IE "LogicalChannelConfig" includes an IE "logicalChannelGroup". With the IE "logicalChannelGroup", a logical channel is allocated to an LCG. For example, for each of one or a plurality of logical channels, an LCG index (ID) may be configured, and an LCG that such one or a plurality of logical channels belong to may be configured. Note that the IE "LogicalChannelConfig" may include an IE "logicalChannelGroupIAB-Ext". The IE "logicalChannelGroupIAB-Ext" is applied only to an Integrated Access Backhaul-Mobile Termination (IAB-MT). In a case where the IE "logicalChannelGroupIAB-Ext" is configured, the IE "LogicalChannelConfig" is ignored.

The terminal apparatus 10 may trigger the BSR in accordance with a certain condition. For example, for an activated cell group, the terminal apparatus 10 may trigger the BSR when any of the following conditions (a1) to (a4) is satisfied. Note that the following conditions may be referred to as "events".

(a1) For a logical channel belonging to a certain LCG, uplink data becomes available to a MAC entity, and either one of the following two is satisfied:

- the uplink data belongs to a logical channel with higher priority than the priorities of any logical channels including available uplink data that belong to any LCG; or
- none of the logical channels that belong to an LCG includes any available uplink data.

(a2) Uplink resources are allocated and the number of padding bits is equal to or larger than a size of a BSR MAC CE plus its subheader.

(a3) "retxBSR-Timer" expires and at least one of the logical channels belonging to an LCG includes uplink data.

(a4) "periodicBSR-Timer" expires.

The BSR includes Regular BSR, Padding BSR, and Periodic BSR, at least. Regular BSR, Padding BSR, and Periodic BSR may each be triggered based on a different condition. For example, the terminal apparatus 10 triggers Regular BSR in a case where either of the condition (a1) or (a3) is satisfied. The terminal apparatus 10 triggers Padding BSR in a case where the condition (a2) is satisfied. The terminal apparatus 10 triggers Periodic BSR in a case where the condition (a4) is satisfied.

The BSR includes a plurality of formats. The plurality of formats include Short BSR and Long BSR, at least. A MAC PDU including the BSR includes a MAC subheader. The MAC subheader includes a logical channel identifier (LCID) or an extended logical channel identifier (eLCID). The value of LCID or eLCID may be referred to as a codepoint. Short BSR and Long BSR are each identified by a codepoint value.

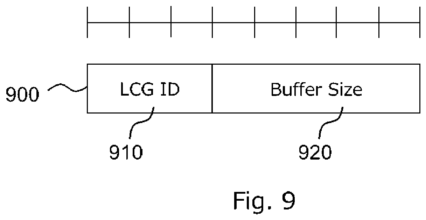

Short BSR is a format for reporting of a buffer status (i.e., buffer size) of one LCG. As illustrated in Fig. 9, the Short BSR includes one field 900 having a fixed size of 8 bits. The field 900 includes a first part 910 and a second part 920.

The first part 910 consists of 3 bits. The first part 910 is information for identification of an LCG whose buffer status is to be reported. The first part 910 may be referred to as "LCG ID field".

The second part 920 consists of 5 bits. The second part 920 is information for identification of the total amount of data available for all the logical channels included in the LCG indicated by the first part 910. The second part 920 may be simply referred to as "buffer size". The second part 920 indicates an index indicating the number of bytes. For example, the second part 920 indicates any one of values 0 to 31.

Note that Short BSR may include Truncated format and Extended format, the Truncated format being a format for a high priority logical channel (the priority herein corresponds to LCH priority) and the Extended format being a format that allows more amount of information to be transmitted.

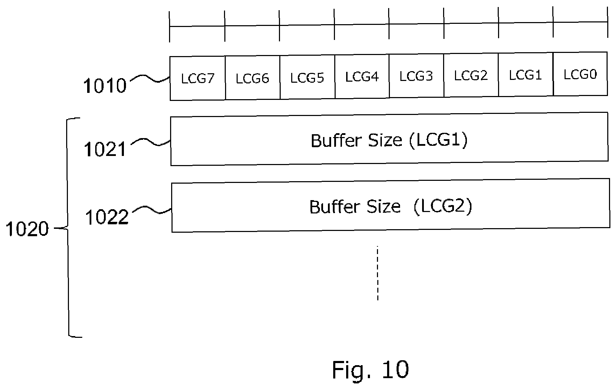

Long BSR is a format for reporting of buffer statuses (i.e., buffer sizes) of a plurality of LCGs. As illustrated in Fig. 10, the Long BSR has a variable size. The Long BSR includes an LCG field 1010 and a buffer size field 1020.

The LCG field 1010 consists of 8 bits. In the LCG field 1010, the 8 bits correspond to the respective eight LCGi. Here, i is an integer from 0 to 7. The same definition of i applies to the description hereinafter. The LCG field 1010 may indicate whether a buffer size field for LCGi is present. For example, in a case where, in the LCG field 1010, the value of LCGi is 1, this indicates presence of the buffer size field corresponding to LCGi. In a case where the value of LCGi is 0, this indicates absence of the buffer size field corresponding to LCGi.

The number of fields included in the buffer size field 1020 is variable depending on the value of the LCG field 1010. In the example of Fig. 10, in the LCG field 1010, it is assumed that a bit corresponding to LCG 1 is 1 and a bit corresponding to LCG 2 is 1. Thus, the buffer size field 1020 includes a field 1021 corresponding to LCG 1 and a field 1022 corresponding to LCG 2. Note that, since a bit corresponding to LCG 0 is assumed to be 0 in Fig. 10, no field corresponding to LCG 0 is included in the buffer size field 1020.

Each field included in the buffer size field 1020 consists of 8 bits. Each field indicates an index indicating the number of bytes. For example, each field indicates any one of values 0 to 254.

Note that, similarly to Short BSR, Long BSR may include Truncated format and Extended format.

The BSR may include Pre-emptive BSR format and Extended Pre-emptive BSR format. These formats are used for an IAB-MT.

The terminal apparatus 10 may select either Short BSR or Long BSR, in accordance with a certain method. For example, in a case of Regular BSR and Periodic BSR, the terminal apparatus 10 may select either Short BSR or Long BSR as below. In a case where two or more LCGs have data (available data) available for transmission when a MAC PDU including a BSR is built, the terminal apparatus 10 transmits Long BSR for all the LCGs having the available data. Otherwise, the terminal apparatus 10 transmits Short BSR.

In a case of Regular BSR and Periodic BSR, with respect to a MAC entity configured with an IE "logicalChannelGroup-IABExt" by an upper layer, the terminal apparatus 10 may select either Short BSR or Long BSR as below. In a case where two or more LCGs have data available for transmission and the maximum value of LCG ID among the configured LCGs is 7 or lower, the terminal apparatus 10 transmits Long BSR for all the LCGs having the available data. In a case where two or more LCGs have data available for transmission and the maximum value of LCG ID among the configured LCGs is higher than 7, the terminal apparatus 10 transmits Extended Long BSR for all the LCGs having the available data. In a case where one or more LCGs have data available for transmission, the terminal apparatus 10 transmits Extended Short BSR.

In a case of Padding BSR, the terminal apparatus 10 may transmit, in accordance with a condition to be satisfied, any one of the following BSR formats.

- Short BSR
- Long BSR
- Short Truncated BSR
- Long Truncated BSR
- Extended Short Truncated BSR
- Extended Long Truncated BSR

1.6. Data Discard Processing

A PDCP entity of the transmitting side stores a PDCP discard timer. Hereinafter, such a PDCP discard timer is referred to as "first timer Tm1". For example, the terminal apparatus 10 performs data discard processing by using the first timer Tm1. The first timer Tm1 is configured for a data radio bearer (DRB).

The base station apparatus 20 transmits, to the terminal apparatus 10, an RRC message including an IE related to PDCP. A duration of the first timer Tm1 may be included in an IE "PDCP-config" being an example of the IE related to PDCP.

A PDCP entity of the terminal apparatus 10 stores the first timer Tm1. The PDCP entity receives a PDCP service data unit (SDU) from a higher layer. On the basis of reception of the PDCP SDU, the PDCP entity starts the first timer Tm1 associated with the PDCP SDU.

In a case where the first timer Tm1 expires with respect to a certain PDCP SDU, the PDCP entity discards the PDCP SDU together with the corresponding PDCP data PDU. In a case where the corresponding PDCP data PDU is already transmitted to a lower layer, the PDCP entity indicates discard of the PDCP data PDU to the lower layer.

1.7. Extended Reality (eXtended Reality, XR)

Characteristics of traffic generated in XR will be described. In XR, a plurality of types of data (video data, voice data, user data, control data, and the like) are transmitted and received in parallel. A plurality of data streams corresponding to the data segments have different traffic characteristics and QoS requirements.

At timings of transmission and reception of the data, time shifts expressed as jitter, variability, and fluctuation may occur due to factors such as encoding of a video and audio and network latency.

Reference Literature 1 describes that the following definitions can be introduced for transmission and reception in XR.

[Reference Literature 1] 3GPP TR 23.700-60 V1.1.0 (2022-09)

PDU set: a set of PDUs including one or more PDUs carrying a payload of one unit of information generated at an application level. The application level corresponds, for example, to a frame or a video slice in an XR service.

Data burst: a set of datamultiple PDUs generated and sent by an application in a short period of time.

Furthermore, for XR, requirements of a packet delay budget (PDB) as the QoS requirements have been studied. The PDB is an upper bound of packet delay time allowed between the terminal apparatus 10 and the UPF. Note that Reference Literature 1 also describes that the following new QoS parameters can be introduced.

PDU-set delay budget (PSDB): an upper bound of PDU-set delay time allowed between the terminal apparatus 10 and the UPF.

PDU-set error rate (PSER): an upper bound of an error rate calculated between a PDU set processed by a sender, and all the PDUs in a PDU set that has not successfully delivered to an upper layer of a corresponding receiver.

1.8. Delay Information Report

1.8.1. Basic Configuration of Delay Information Report

For XR, implementation under various requirements including a requirement of low latency is assumed. With this, regarding uplink communication from the terminal apparatus 10, the base station 20 allocates radio resources taking account of the requirements. In order for such radio resource allocation to be performed, the terminal apparatus 10 transmits, to the base station apparatus 20, a delay information report including delay information for certain data. Note that the delay information report may be referred to as "delay status report".

The certain data means a unit of data to be reported in the delay information report. Hereinafter, the certain data may be referred to as "data to be reported" or "unit of data to be reported". Such a configuration allows the terminal apparatus 10 to transmit, to the base station apparatus 20, delay information regarding data to be reported.

The unit of data to be reported may be data corresponding to one LCG. Such one LCG may include one or a plurality of LCHs (i.e., data corresponding to one or a plurality of LCHs). In this configuration, the unit of data to be reported may be a part or all of the data available for one LCG.

The unit of data to be reported may be data corresponding to one PDU. In this configuration, the unit of data to be reported may be a part or all of the data available for one PDU. The unit of data to be reported may be data corresponding to one PDU set. In this configuration, the unit of data to be reported may be a part or all of the data available for one PDU set. Furthermore, the unit of data to be reported may be data corresponding to a plurality of PDU sets. For example, the unit of data to be reported may be data (or a part of data) available for one or a plurality of or all PDUs (or PDU sets) belonging to one PDU set.

The unit of data to be reported may be data corresponding to one data burst. In this configuration, the unit of data to be reported may be a part or all of the data available for one data burst. Note that the unit of data to be reported may be data corresponding to a plurality of data bursts. For example, the unit of data to be reported may be data (or a part of data) available for one or a plurality of or all data segments (or data bursts) belonging to one data burst.

The delay information may include one or both of information explicitly indicating delay and information implicitly indicating delay.

- Information explicitly indicating delay

For example, the delay information may be a delay time or an index representing the delay time. The delay information may be a remaining time until a certain first deadline is reached. The remaining time may be calculated on the basis of the first timer (i.e., PDCP discard timer) Tm1. The terminal apparatus 10 may calculate the remaining time on the basis of the first timer Tm1, with a time of an initial (or first) transmission of the delay information report as a reference. For example, the terminal apparatus 10 may calculate the remaining time of a PDU of a certain PDU set on the basis of the first timer Tm1 associated with a PDU first arrived in the PDU set. The delay information may include information related to a plurality of remaining times. In another example, the delay information may be information related to the shortest remaining time of the plurality of remaining times.

- Information implicitly indicating delay

For example, the delay information may include information related to data provided with a temporal restriction or requirement among the data to be reported. Hereinafter, all the data to be reported is referred to as "first data" and the data provided with the temporal restriction or requirement among the data to be reported is referred to as "second data". The delay information may be information related to a size of the second data. For example, the delay information may be an index indicating the number of bytes of the second data.

The second data may be data to be transmitted prioritized. The second data may be referred to as urgent data. The second data may be data that satisfies a condition related to delay. For example, the second data may be data associated with the above-described remaining time. For example, a certain first threshold Th1 may be applied to the remaining time of the first timer Tm1. The second data may be data of which the remaining time is below the first threshold Th1.

In another example, the second data may be data provided with a restriction or requirement related to a time shift in delay such as jitter. In still another example, the second data may be data provided with a restriction or requirement for a transmission rate.

For example, the base station apparatus 20 may transmit information indicating the first threshold Th1 to the terminal apparatus 10. The base station apparatus 20 may transmit, to the terminal apparatus 10, an RRC message including information indicating the first threshold Th1. The first threshold Th1 may be configured for an LCH. For example, the first threshold Th1 may be configured as a new element of the IE "LogicalChannel-Config". The first threshold Th1 may be configured for an LCG. For example, the first threshold Th1 may be configured as a new element of the IE "logicalChannelGroup". The first threshold Th1 may be configured for a PDU or PDU set. The first threshold Th1 may be configured for an IE related to the PDU or PDU set included in the RRC message. The first threshold Th1 may be configured for a data burst. The first threshold Th1 may be configured for an IE related to the data burst included in the RRC message. The first threshold Th1 may be configured for the terminal apparatus 10. Note that the base station apparatus 20 may transmit, to the terminal apparatus 10, system information (SI, for example, SIB1 and/or SIB other than SIB1) including information indicating the first threshold Th1. The base station apparatus 20 may transmit, to the terminal apparatus 10, DCI including information indicating the first threshold Th1.

The base station apparatus 20 may configure a plurality of first thresholds Th1 for the respective LCGs. In this configuration, the plurality of first thresholds Th1 may have the respective values different from each other. Similarly, the base station apparatus 20 may configure the plurality of first thresholds Th1 for the respective PDUs, PDU sets, or data bursts.

Each first threshold Th1 may be used as a threshold for triggering of the delay information report. In other words, the terminal apparatus 10 may trigger (and/or transmit) the delay information report on the basis of the first threshold Th1. In a case where the remaining time is below the first threshold Th1, the terminal apparatus 10 may trigger (and/or transmit) the delay information report. For example, in a case where the remaining time with respect to a certain PDU or PDU set becomes below the first threshold Th1 configured for an LCG, the terminal apparatus 10 may trigger (and/or transmit) the delay information report.

The base station apparatus 20 may determine a degree of delay on the basis of the delay information included in the delay information report. For example, the base station apparatus 20 may determine the degree of delay on the basis of the remaining time and/or the size of the second data. The base station apparatus 20 may allocate a radio resource for uplink communication from the terminal apparatus 10, on the basis of the delay information.

1.8.2. Detailed Configuration of Delay Information Report

The terminal apparatus 10 may transmit, as the delay information report, a MAC CE including the delay information. For example, the terminal apparatus 10 may transmit a BSR including the delay information report. In this configuration, the terminal apparatus 10 may transmit the BSR including the delay information report in accordance with the following procedure.

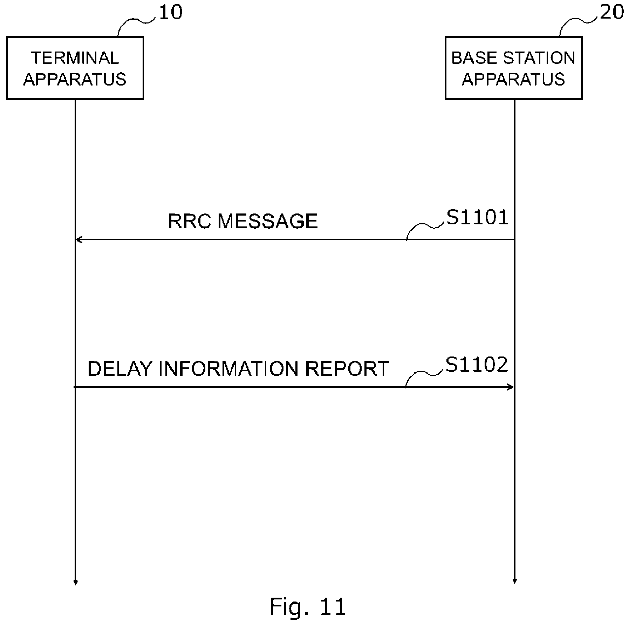

As illustrated in Fig. 11, the communicator 220 in the base station apparatus 20 transmits, to the terminal apparatus 10, an RRC message (S1101). The RRC message includes a parameter related to a BSR. The RRC message may be an RRC reconfiguration (RRCReconfiguration) message. Based on the parameter included in the RRC message, the controller 110 in the terminal apparatus 10 generates a BSR. The BSR includes buffer size information related to a buffer size and delay information. The communicator 120 in the terminal apparatus 10 transmits the BSR including the delay information report (S1102). The controller 210 in the base station apparatus 20 performs radio resource allocation for the terminal apparatus 10 based on the delay information report.

In a case where the delay information report is included in the BSR, the terminal apparatus 10 may trigger the BSR including the delay information report based on at least one of the above-described conditions (a1) to (a4). In addition, as described above, the terminal apparatus 10 may trigger the BSR including the delay information report based on the first threshold Th1. In a case where the above-described remaining time becomes below the first threshold Th1, the terminal apparatus 10 may trigger the BSR including the delay information report.

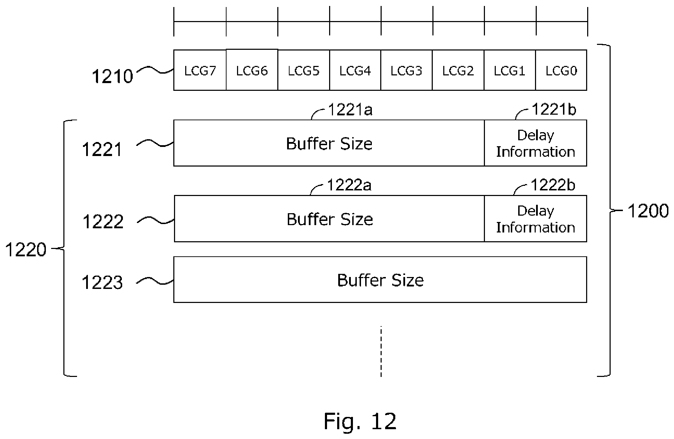

The terminal apparatus 10 may transmit Long BSR 1200 illustrated in Fig. 12. The Long BSR 1200 includes a first field 1210 and a second field 1220.

The first field 1210 may have a configuration the same as that of the LCG field 1010 in Fig. 10. The first field 1210 may be a field indicating whether LCGi has available data. For example, in a case where, in the first field 1210, the value of LCGi is 1, this may indicate that LCGi has available data. In a case where the value of LCGi is 0, this may indicate that LCGi has no available data. The first field 1210 may be a field indicating whether LCGi has available second data. For example, the first field 1210 may be a field indicating whether LCGi has available data of which the remaining time of the first timer Tm1 is below the first threshold Th1.

In the present example, the second field 1220 includes three fields 1221 to 1223.

The field 1221 is a field related to LCG 1. The field 1221 includes a first part 1221a and a second part 1221b. In the present example, the first part 1221a has 6 bits and the second part 1221b has 2 bits. Note that, not limited to this configuration, the first part 1221a and the second part 1221b may each include the number of bits different from that in this example.

The first part 1221a indicates a buffer size related to data corresponding to LCG 1. For example, the first part 1221a may be an index indicating the number of bytes. The controller 110 may reference to a first buffer size table for 6 bits, in order to configure an index for the first part 1221a. The first buffer size table is a table that defines a correspondence relationship between buffer sizes and indices.

The second part 1221b indicates the delay information (e.g., the above-mentioned remaining time) related to the data corresponding to LCG 1. The second part 1221b may be an index indicating the delay information. The controller 110 may reference to a delay information table for 2 bits, in order to configure an index for the second part 1221b. The delay information table is a table that defines a correspondence relationship between delay information and indices.

The field 1222 is a field related to LCG 2. The field 1222 includes a first part 1222a and a second part 1222b. The first part 1222a and second part 1222b have a configuration the same as that of the first part 1221a and second part 1221b described above.

The field 1223 is a field related to LCG 3. The field 1223 indicates a buffer size related to data corresponding to LCG 3. Regarding the data corresponding to LCG 3, it is assumed that the remaining time is longer than the first threshold Th1. In other words, the data corresponding to LCG 3 has no delay. In this case, the field 1223 may include the information related to the buffer size and include no delay information. The controller 110 may reference to a second buffer size table for 8 bits, in order to configure an index for the field 1223. The second buffer size table is a table that defines a correspondence relationship between buffer sizes and indices. As described above, in order to configure an index corresponding to the information related to the buffer size, the controller 110 may switch a table for use between the first buffer size table and the second buffer size table.

Note that, in the example described above, although the second field 1220 includes the three fields 1221 to 1223, the configuration is not limited to this. The number of fields included in the second field 1220 may be variable. In another example, the order of fields included in the second field 1220 may be determined based on their LCH priorities.

In another example, the Long BSR 1200 may include a third field indicating whether the delay information is included for each LCG. For example, in the third field, a case where the value of LCGi is 1 may indicate that the delay information related to LCGi is included. A case where the value of LCGi is 0 may indicate that no delay information related to LCGi is included.

In still another example, the first part 1221a of the field 1221 and the first part 1222a of the field 1222 may each be information related to a size of the second data. The second data may be data of which the remaining time is below the first threshold Th1. For example, the first part 1221a of the field 1221 may be information related to the size of the second data corresponding to LCG 1. Similarly, the first part 1222a of the field 1222 may be information related to the size of the second data corresponding to LCG 2. Further, in this example, the field 1221 may include no second part 1221b of the field 1221, and the field may include no second part 1222b of the field 1222.

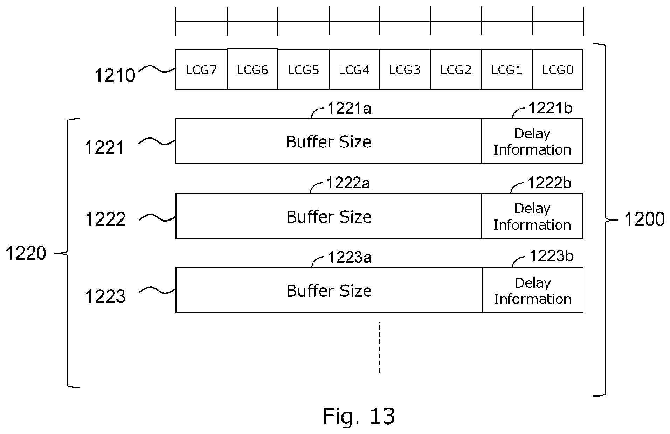

As illustrated in Fig. 13, each of the fields 1221 to 1223 included in the second field 1220 may include a first part corresponding to the information related to the buffer size and a second part corresponding to the delay information. Hereinafter, only details different from that of the configuration in Fig. 12 are described, and description on details the same as that of the configuration in Fig. 12 is omitted.

The field 1223 is a field related to LCG 3. The field 1223 includes a first part 1223a and a second part 1223b. In the present example, the first part 1223a has 6 bits and the second part 1223b has 2 bits. For example, the first part 1223a may be an index indicating the number of bytes. The controller 110 may reference to the first buffer size table, in order to configure an index for the first part 1223a. As described above, regarding the data corresponding to LCG 3, it is assumed that the remaining time is longer than the first threshold Th1. In this case, the second part 1223b may be blank. In another example, the second part 1223b may be a value (or index) indicating that no delay information is reported.

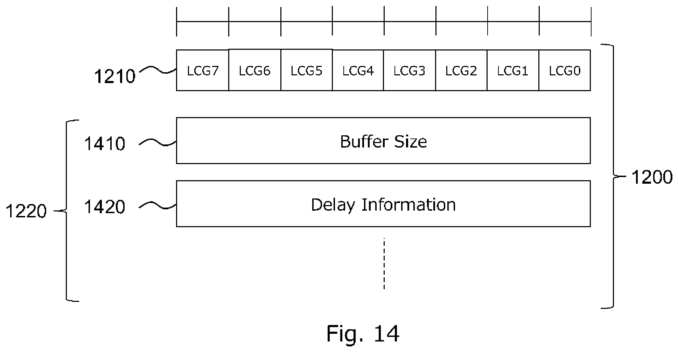

Furthermore, the configuration of the second field 1220 is not limited to the examples described above. As illustrated in Fig. 14, the second field 1220 may include a field 1410 of 8 bits corresponding to the information related to the buffer size and a field 1420 of 8 bits corresponding to the delay information. For example, the field 1410 indicates the information related to the buffer size of the data corresponding to LCG 1 and the field 1420 indicates the delay information related to the data corresponding to LCG 1. As described above, such buffer size information and delay information related to one LCG may be indicated with two different fields.

In the examples described above, although a configuration of Long BSR is described, the configuration is not limited to the examples. The configuration described above may be applied to Short BSR. For example, the terminal apparatus 10 may transmit Short BSR including the delay information.

Note that, although a configuration of a BSR including the delay information report is described, the configuration is not limited to this. A new MAC CE for transmission of the delay information may be defined. For example, the terminal apparatus 10 may transmit, as the delay information report, a MAC CE including the delay information. Thus, the term "BSR including delay information" described in the Specification may be replaced with "MAC CE including the delay information".

The terminal apparatus 10 may receive, from the base station apparatus 20, first indication information related to the delay information report. The base station apparatus 20 may transmit, to the terminal apparatus 10, an RRC message including the first indication information. The base station apparatus 20 may transmit, to the terminal apparatus 10, system information (SI, for example, SIB1 and/or SIB other than SIB1) including the first indication information. The base station apparatus 20 may transmit, to the terminal apparatus 10, DCI including the first indication information.

The first indication information may be "information indicating whether to trigger (or transmit) the delay information report". The first indication information may indicate "triggering (or transmission) of the delay information report" or "no triggering (or no transmission) of the delay information report". The first indication information may be a flag indicating "triggering (or transmission) of the delay information report" or "no triggering (or no transmission) of the delay information report". Note that the first indication information may be "information indicating whether to transmit the delay information (for example, the remaining time)". Furthermore, the first indication information may be "information indicating whether to transmit information related to the size of the second data".

For example, in a case where the first indication information is included in the RRC message, the terminal apparatus 10 may trigger (or transmit) the delay information report. In a case where the first indication information is not included in the RRC message, the terminal apparatus 10 need not trigger (or transmit) the delay information report.

The first indication information may be configured for an LCG. On the basis of the first indication information configured for an LCG, the terminal apparatus 10 may determine whether to include, in the BSR, the delay information related to the LCG. For example, in a case where the first indication information indicates transmission of the delay information for a certain LCG, the terminal apparatus 10 may include, in the BSR, the delay information related to the LCG. For example, the first indication information may be configured as a new element of an IE "logicalChannelGroup". The first indication information may be configured for an LCH. For example, the first indication information may be configured as a new element of an IE "LogicalChannel-Config". On the basis of the first indication information configured for an LCH, the terminal apparatus 10 may determine whether to include, in the BSR, the delay information related to the LCH. For example, in a case where the first indication information indicates transmission of the delay information for a certain LCH, the terminal apparatus 10 may include, in the BSR, the delay information related to the LCH. The first indication information may be configured for a PDU or PDU set. On the basis of the first indication information configured for a PDU or PDU set, the terminal apparatus 10 may determine whether to include, in the BSR, the delay information related to the PDU or PDU set. For example, in a case where the first indication information indicates transmission of the delay information for a certain PDU or PDU set, the terminal apparatus 10 may include, in the BSR, the delay information related to the PDU or PDU set. The first indication information may be configured for an IE related to the PDU or PDU set included in the RRC message. The first indication information may be configured for a data burst. On the basis of the first indication information configured for a data burst, the terminal apparatus 10 may determine whether to include, in the BSR, the delay information related to the data burst. For example, in a case where the first indication information indicates transmission of the delay information for a certain data burst, the terminal apparatus 10 may include, in the BSR, the delay information related to the data burst. The first indication information may be configured for an IE related to the data burst included in the RRC message.

The base station apparatus 20 may indicate, to the terminal apparatus 10, by using the first threshold Th1, whether to trigger (or transmit) the delay information report. For example, in a case where the RRC message includes information indicating the first threshold Th1, the terminal apparatus 10 may perform control to trigger (and/or transmit) the delay information report. In other words, in the case where the RRC message includes information indicating the first threshold Th1, the terminal apparatus 10 may include, in the BSR, the delay information report on the basis of the first threshold Th1. In a case where the RRC message includes no information indicating the first threshold Th1, the terminal apparatus 10 may perform control not to trigger (and/or transmit) the delay information report. In other words, in the case where the RRC message includes no information indicating the first threshold Th1, the terminal apparatus 10 need not include, in the BSR, the delay information report.

The terminal apparatus 10 may receive, from the base station apparatus 20, second indication information related to the delay information report. The base station apparatus 20 may transmit, to the terminal apparatus 10, an RRC message including the second indication information. The base station apparatus 20 may transmit, to the terminal apparatus 10, system information (SI, for example, SIB1 and/or SIB other than SIB1) including the second indication information. The base station apparatus 20 may transmit, to the terminal apparatus 10, DCI including the second indication information.

The second indication information may indicate the type of data to be reported. For example, the second indication information may be information indicating any one of LCH, LCG, PDU, PDU set, and data burst. In this configuration, the terminal apparatus 10 may select the type of the data to be reported on the basis of the second indication information. For the selected data, the terminal apparatus 10 may transmit the delay information report.

The second indication information may be information implicitly indicated in accordance with an IE the first indication information is configured for. For example, in a case where the first indication information is configured for a MAC cell group, this may indicate that the unit of data to be reported is data corresponding to one LCG. For example, the first indication information may be configured for an IE related to a MAC cell group included in the RRC message. Examples of such an IE may include an IE "BSR-config". For another example, in a case where the first indication information is configured for an LCG, this may indicate that the unit of data to be reported is data corresponding to one LCG. For example, the first indication information may be configured for an IE related to an LCG. Examples of such an IE may include the IE "logicalChannelGroup". In a case where the first indication information is configured for an LCH, this may indicate that the unit of data to be reported is data corresponding to one LCH. The first indication information may be configured for an IE related to an LCH. Examples of such an IE may include the IE "LogicalChannelConfig".

In a case where the first indication information is configured for a PDU or PDU set, this may indicate that the unit of data to be reported is data corresponding to a PDU or one or more PDU sets. For example, the first indication information may be configured for an IE related to a PDU or PDU set included in the RRC message.

In a case where the first indication information is configured for a data burst, this may indicate that the unit of data to be reported is data corresponding to one or more data bursts. For example, the first indication information may be configured for an IE related to a data burst included in the RRC message.

A MAC PDU may include identification information for identification of whether the delay information report is provided. For example, a MAC subheader includes a value (i.e., codepoint) of LCID or eLCID. A value of LCID or eLCID for indication of the delay information report may be defined. Based on the type of the data to be reported, the following value of LCID or eLCID may be defined.

- The MAC CE includes the delay information report and the unit of data to be reported is data corresponding to one LCH.
- The MAC CE includes the delay information report and the unit of data to be reported is data corresponding to one LCG.
- The MAC CE includes the delay information report and the unit of data to be reported is data corresponding to one PDU.
- The MAC CE includes the delay information report and the unit of data to be reported is data corresponding to one or more PDU sets.
- The MAC CE includes the delay information report and the unit of data to be reported is data corresponding to one or more data bursts.

In a case where a BSR includes the delay information report, based on the type of the data to be reported, the following value of LCID or eLCID may be defined.

- The BSR includes the delay information report and the unit of data to be reported is data corresponding to one LCH.
- The BSR includes the delay information report and the unit of data to be reported is data corresponding to one LCG.
- The BSR includes the delay information report and the unit of data to be reported is data corresponding to one PDU.

- The BSR includes the delay information report and the unit of data to be reported is data corresponding to one or more PDU sets.
- The BSR includes the delay information report and the unit of data to be reported is data corresponding to one or more data bursts.

Furthermore, a value of LCID or eLCID may be defined indicating that the BSR includes the delay information report and that which one of the following formats the BSR is in.

- Short BSR
- Long BSR
- Short Truncated BSR
- Long Truncated BSR
- Extended Short Truncated BSR
- Extended Long Truncated BSR
- Pre-emptive BSR
- Extended Pre-emptive BSR

In another example, a MAC CE including the delay information report may include the identification information. For example, the BSR may further include a field including the identification information that indicates the delay information is included.

1.9. PDU Set Importance (PSI)

For communication requiring real-time property such as XR, real-time transport protocol (RTP) is assumed to be used. An RTP packet includes an RTP payload, an RTP header, and the like.
In NPL 2, a field included in an RTP header extension is defined. The above-described PDU set importance (i.e., PSI) is included in the RTP header extension. The PSI is associated with a PDU set and indicates the importance compared with other PDU sets within the same QoS flow.
The PSI is, for example, represented with 4 bits. The PSI may take values from 0 to 15. The lower the value of the PSI is the higher the importance of a PDU set associated with the PSI is. For example, the importance of a PDU set associated with PSI "0" is the highest. The importance of a PDU set associated with PSI "15" is the lowest. Hence, in the following description, the expression "a PSI value is relatively small" may be interpreted as the expression "the importance of the corresponding data (i.e., PDU set) is relatively high". The expression "a PSI value is relatively great" may be interpreted as the expression "the importance of the corresponding data (i.e., PDU set) is relatively low".

1.10. Data Discard Processing Based on PSI

In a case where congestion occurs, the terminal apparatus 10 may perform data discard processing based on the PSI. Hereinafter, such discard processing is also referred to as "PSI-based discard processing" for simplification of the expression.
The terminal apparatus 10 may receive, from the base station apparatus 20, first configuration information related to the PSI-based discard processing. The first configuration information may be information indicating activation or application of the PSI-based discard processing. The first configuration information may be information indicating that congestion has occurred. For example, the base station apparatus 20 may transmit the first configuration information to the terminal apparatus 10, by using a PDCP control PDU, an RRC message, a MAC CE, or DCI. In a case of having received the first configuration information from the base station apparatus 20, the terminal apparatus 10 may activate the PSI-based discard processing.
The terminal apparatus 10 may receive, from the base station apparatus 20, second configuration information related to the PSI-based discard processing. The second configuration information may be information indicating deactivation or disapplication of the PSI-based discard processing. The second configuration information may be information indicating that congestion has been resolved. For example, the base station apparatus 20 may transmit the second configuration information to the terminal apparatus 10, by using a PDCP control PDU, an RRC message, a MAC CE, or DCI. In a case of having received the second configuration information from the base station apparatus 20, the terminal apparatus 10 may deactivate the PSI-based discard processing.
In another example, instead of the second configuration information, the terminal apparatus 10 may receive, from the base station apparatus 20, duration information related to a duration that the PSI-based discard processing is activated for. In this configuration, the terminal apparatus 10 may keep the PSI-based discard processing activated, from a time point of reception of the first configuration information until the duration indicated by the duration information elapses. The terminal apparatus 10 may receive, from the base station apparatus 20, an RRC message including the duration information. In another example, the duration information may be included in the first configuration information.
In another example, the terminal apparatus 10 may keep the PSI-based discard processing activated, until data stored (or buffered) in a related DRB runs out.
Note that a state that the PSI-based discard processing is not activated may be referred to as "first state", "normal state", "first mode", or the like. A state that the PSI-based discard processing is activated may be referred to as "second state", "congestion state", "second mode", or the like.
The PSI-based discard processing may include at least one of first discard processing or second discard processing described below.

1.10.1 First Discard Processing

A PDCP entity of the terminal apparatus 10 may perform the first discard processing, by using one or a plurality of PDCP discard timers each different from the first timer Tm1. Hereinafter, such a discard timer used in the first discard processing is referred to as "second timer Tm2", for distinguishment from the first timer Tm1.

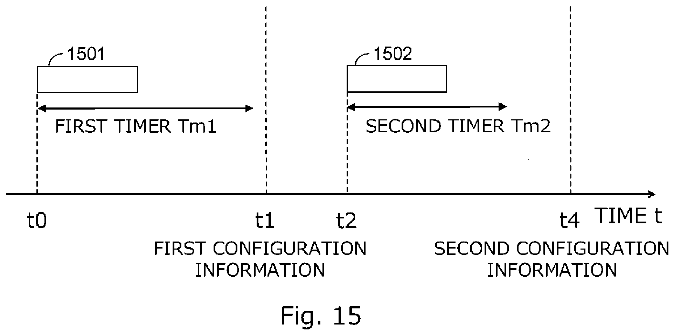

One second timer Tm2 may be configured for a DRB. As illustrated in Fig. 15, a PDCP entity of the terminal apparatus 10 receives, at a time t0, a packet 1501 from a higher layer. The terminal apparatus 10 starts the first timer Tm1 from the time t0. In a case where the first timer Tm1 expires, the terminal apparatus 10 discards the packet 1501.

The terminal apparatus 10 receives, at a time t1, the first configuration information from the base station apparatus 20. The terminal apparatus 10 activates the first discard processing on the basis of the first configuration information. In other words, the terminal apparatus 10 switches the discard timer to use from the first timer Tm1 to the second timer Tm2. In the present example, the terminal apparatus 10 keeps the first discard processing activated, until reception of the second configuration information from the base station apparatus 20.

Thereafter, the PDCP entity of the terminal apparatus 10 receives, at a time t2, a packet 1502 from the higher layer. The terminal apparatus 10 starts the second timer Tm2 from the time t2. The second timer Tm2 may be shorter than the first timer Tm1. With such a configuration, in a case where congestion occurs, the terminal apparatus 10 can discard a packet early, as compared with a case before activation of the first discard processing. This allows possibility for congestion to be resolved to be raised.

Thereafter, the terminal apparatus 10 receives, at a time t4, the second configuration information from the base station apparatus 20. The terminal apparatus 10 deactivates the first discard processing on the basis of the second configuration information. In other words, the terminal apparatus 10 switches the discard timer to use from the second timer Tm2 to the first timer Tm1.

The second timer Tm2 may be configured per PSI. For example, a plurality of second timers Tm2-0, ..., Tm2-15 may be respectively configured for the PSI values 0, ..., 15. In this example, the subscripts of the second timers Tm2 each denote the corresponding PSI value. For example, the second timer Tm2-0 is used for data (i.e., PDU set) associated with PSI "0". In a case where the second timer Tm2-0 expires, the terminal apparatus 10 discards data associated with PSI "0".

The plurality of second timers Tm2-0, ..., Tm2-15 may have the respective values different from each other. For example, the smaller the PSI value is (in other words, the relatively higher the importance of data associated with the PSI is), the greater the value of the second timer Tm2 may be configured to be. For example, the value of the second timer Tm2-0 corresponding to PSI "0" may be the greatest. The value of the second timer Tm2-15 corresponding to PSI "15" may be the smallest. With such a configuration, the terminal apparatus 10 can discard data having a relatively low importance early, while storing data having a relatively high importance long.

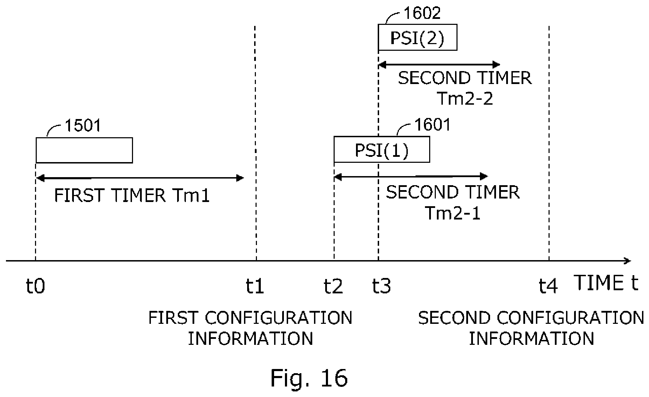

In Fig. 16, the flow until the time t1 is the same as that in Fig. 15, and thus the description thereof is omitted. As illustrated in Fig. 16, a PDCP entity of the terminal apparatus 10 receives, at a time t2, a packet 1601 from a higher layer. The PSI associated with the packet 1601 is "1". The terminal apparatus 10 starts the second timer Tm2-1 from the time t2. The value of the second timer Tm2-1 may be smaller than the value of the first timer Tm1. In a case where the second timer Tm2-1 expires, the terminal apparatus 10 discards the packet 1601.

Then, the PDCP entity of the terminal apparatus 10 receives, at a time t3, a packet 1602 from the higher layer. The PSI associated with the packet 1602 is "2". The terminal apparatus 10 starts the second timer Tm2-2 from the time t3. The PSI value associated with the packet 1602 is greater than the PSI value associated with the packet 1601. In other words, the importance of the packet 1602 is lower than the importance of the packet 1601. Therefore, the value of the second timer Tm2-2 may be smaller than the value of the second timer Tm2-1. With such a configuration, the terminal apparatus 10 can discard data having a relatively low importance earlier, while storing data having a relatively high importance long.

Thereafter, the terminal apparatus 10 receives, at a time t4, the second configuration information from the base station apparatus 20. The terminal apparatus 10 deactivates the first discard processing on the basis of the second configuration information. In other words, the terminal apparatus 10 switches the discard timer to use from the plurality of second timers Tm2-0, ..., Tm2-15 to the first timer Tm1.

Note that at least one of the plurality of second timers Tm2-0, ..., Tm2-15 may be greater than the first timer Tm1. For example, a second timer Tm2 (for example, Tm2-0) corresponding to a small PSI may be greater than the first timer Tm1. With such a configuration, the terminal apparatus 10 can store data of high importance relatively long.

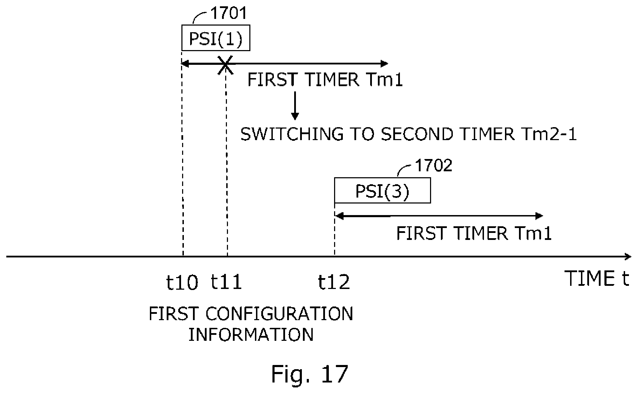

The terminal apparatus 10 may activate the first discard processing only for data stored (or buffered) in the terminal apparatus 10 at a time point of reception of the first configuration information. As illustrated in Fig. 17, a PDCP entity of the terminal apparatus 10 receives, at a time t10, a packet 1701 from a higher layer. The PSI associated with the packet 1701 is "1". The terminal apparatus 10 starts the first timer Tm1 from the time t10.

The terminal apparatus 10 receives, at a time t11, the first configuration information from the base station apparatus 20. At the time t11, the terminal apparatus 10 is still storing the packet 1701. Thus, the terminal apparatus 10 activates the first discard processing for the packet 1701. In other words, the terminal apparatus 10 switches the discard timer to use from the first timer Tm1 to the second timer Tm2-1. For example, the terminal apparatus 10 may stop, at the time t11, the first timer Tm1 on the basis of reception of the first configuration information, and consider instead that the second timer Tm2-1 has been running since the time t10. In a case where the second timer Tm2-1 expires, the terminal apparatus 10 discards the packet 1701.

Meanwhile, at a time t12 after reception of the first configuration information, the PDCP entity of the terminal apparatus 10 receives a packet 1702 from the higher layer. The PSI associated with the packet 1702 is "3". In this case, the terminal apparatus 10 does not activate the first discard processing for the packet 1702. The terminal apparatus 10 starts the first timer Tm1 from the time t12. In a case where the first timer Tm1 expires, the terminal apparatus 10 discards the packet 1702.

Although an example where the second timer Tm2 is configured per PSI is described above, the configuration of the second timer Tm2 is not limited to the example. For example, the second timer Tm2 may be configured per PSI range. For example, a plurality of second timers Tm2-a and Tm2-b may be respectively configured for a first PSI range (for example, 0 to 6) and a second PSI range (for example, 7 to 15). In this example, the second timer Tm2-a is used for data associated with the first PSI range (for example, 0 to 6). The second timer Tm2-b is used for data associated with the second PSI range (for example, 7 to 15). The value of the second timer Tm2-a may be greater than the value of the second timer Tm2-b.

The terminal apparatus 10 may receive, from the base station apparatus 20, timer information related to one or a plurality of the second timers Tm2. The base station apparatus 20 may transmit, to the terminal apparatus 10, an RRC message including the timer information. The timer information may be included in the information element (IE) "PDCP-config" being an example of an RRC IE. In another example, the timer information may be included in the first configuration information.

The terminal apparatus 10 may activate the first discard processing on the basis of PSI threshold information related to a PSI threshold Pth. The PSI threshold information may be configured in advance in the terminal apparatus 10. In another example, the terminal apparatus 10 may receive the PSI threshold information from the base station apparatus 20. For example, the base station apparatus 20 may transmit, to the terminal apparatus 10, an RRC message including the PSI threshold information. The PSI threshold information may be included in the information element (IE) "PDCP-config" being an example of an RRC IE. In another example, the PSI threshold information may be included in the first configuration information. For example, the terminal apparatus 10 may activate the first discard processing for a PSI greater than the PSI threshold Pth. For example, assume that the PSI threshold Pth is "5". The terminal apparatus 10 may activate the first discard processing only for data with a PSI in a range from 5 to 15, considering data associated with a PSI equal to or greater than PSI "5" to be of low importance. In other words, the terminal apparatus 10 may perform, for data with a PSI in a range from 0 to 4, data discard processing by using the first timer Tm1 and perform, for data with a PSI in the range from 5 to 15, data discard processing (i.e., the first discard processing) by using the plurality of second timers Tm2-5, ..., Tm2-15.

1.10.2 Second Discard Processing

A PDCP entity of the terminal apparatus 10 may perform the second discard processing on the basis of the PSI. For example, the terminal apparatus 10 may activate the second discard processing for data associated with a PSI equal to or greater than the PSI threshold Pth indicated by the PSI threshold information. The second discard processing may be processing of discarding data associated with the PSI equal to or greater than the PSI threshold Pth without using the discard timer (i.e., the first timer Tm1) for the data.

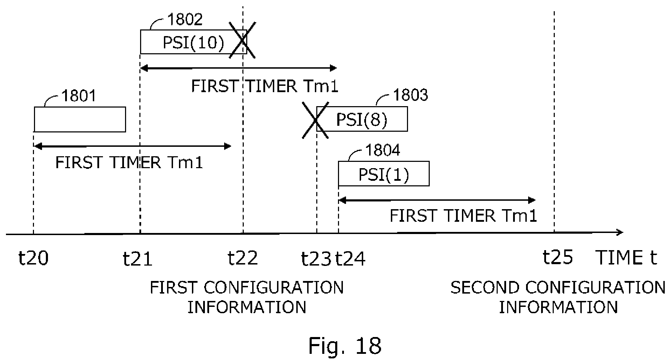

As illustrated in Fig. 18, a PDCP entity of the terminal apparatus 10 receives, at a time t20, a packet 1801 from a higher layer. The terminal apparatus 10 starts the first timer Tm1 from the time t20. In a case where the first timer Tm1 expires, the terminal apparatus 10 discards the packet 1801.

The PDCP entity of the terminal apparatus 10 receives, at a time t21, a packet 1802 from the higher layer. The PSI associated with the packet 1802 is "10". The terminal apparatus 10 starts the first timer Tm1 from the time t21.

The terminal apparatus 10 receives, at a time t22, the first configuration information from the base station apparatus 20. The first configuration information may include the PSI threshold information. For example, assume that the PSI threshold Pth is "5". The terminal apparatus 10 activates the second discard processing for packets with the PSI in the range from 5 to 15.

The terminal apparatus 10 is storing the packet 1802 at the time point of reception of the first configuration information. Furthermore, PSI "10" associated with the packet 1802 is equal to or greater than the PSI threshold Pth. Thus, the terminal apparatus 10 discards the packet 1802.

In the present example, the terminal apparatus 10 keeps the second discard processing activated, until reception of the second configuration information from the base station apparatus 20. The PDCP entity of the terminal apparatus 10 receives, at a time t23, a packet 1803 from the higher layer. The PSI associated with the packet 1803 is "8". Thus, the terminal apparatus 10 activates the second discard processing for the packet 1803. The terminal apparatus 10 discards the packet 1803, without using the first timer Tm1.

Meanwhile, the PDCP entity of the terminal apparatus 10 receives, at a time t24, a packet 1804 from the higher layer. The PSI associated with the packet 1804 is "1". Thus, the terminal apparatus 10 starts the first timer Tm1 from the time t24, without activating the second discard processing for the packet 1804. In a case where the first timer Tm1 expires, the terminal apparatus 10 discards the packet 1804.

With such a configuration, the terminal apparatus 10 can discard data having a relatively low importance earlier, while storing data having a relatively high importance long.

Thereafter, the terminal apparatus 10 receives, at a time t25, the second configuration information from the base station apparatus 20. The terminal apparatus 10 deactivates the second discard processing on the basis of the second configuration information.

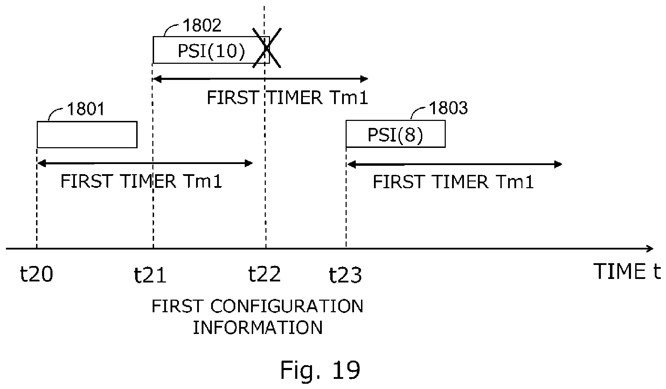

The terminal apparatus 10 may activate the second discard processing only for data stored (or buffered) in the terminal apparatus 10 at the time point of reception of the first configuration information. In Fig. 19, the flow until the time t22 is the same as that in Fig. 18, and thus the description thereof is omitted.

As illustrated in Fig. 19, the terminal apparatus 10 does not activate the second discard processing for packets received after the time t22. The PDCP entity of the terminal apparatus 10 receives, at the time t23, the packet 1803 from the higher layer. The PSI associated with the packet 1803 is "8". The terminal apparatus 10 starts the first timer Tm1 from the time t23, without activating the second discard processing for the packet 1803. In a case where the first timer Tm1 expires, the terminal apparatus 10 discards the packet 1803.

1.11. Calculation of Delay Information Included in Delay Information Report

In a case where the terminal apparatus 10 activates the first discard processing, the terminal apparatus 10 uses the second timer Tm2. Assume that, while the terminal apparatus 10 keeps the first discard processing activated, the base station apparatus 20 receives the delay information report. It is difficult for the base station apparatus 20 to judge which of the first timer Tm1 or second timer Tm2 the remaining time included in the delay information report is calculated based on. As a result, the base station apparatus 20 may misrecognize the remaining time.

With this taken into account, the terminal apparatus 10 may calculate the remaining time included in the delay information report on the basis of the first timer Tm1, even while the first discard processing is activated. In other words, the terminal apparatus 10 may calculate the remaining time included in the delay information report on the basis of the first timer Tm1 all the time. A first aspect and second aspect of such a configuration will be described below.

1.11.1. First Aspect

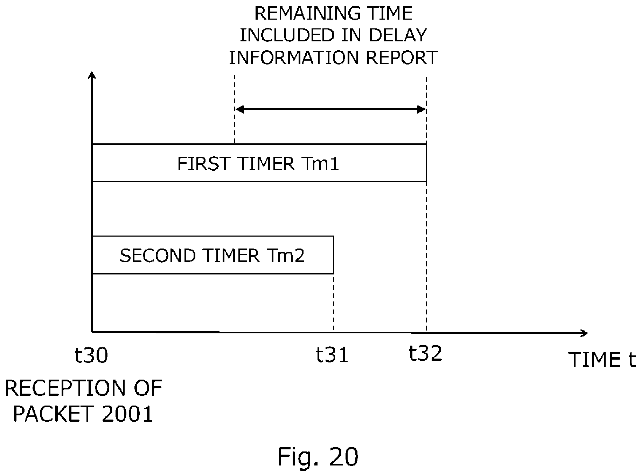

The terminal apparatus 10 may use both the first timer Tm1 and second timer Tm2, while the first discard processing is activated. As illustrated in Fig. 20, a PDCP entity of the terminal apparatus 10 receives, at a time t30, a packet 2001 from a higher layer. The terminal apparatus 10 starts the first timer Tm1 and second timer Tm2 from the time t30. The terminal apparatus 10 uses the first timer Tm1 with respect to calculation of the remaining time included in the delay information report. The terminal apparatus 10 includes, in the delay information report, the remaining time calculated based on the first timer Tm1 as the delay information. Meanwhile, the terminal apparatus 10 uses the second timer Tm2 with respect to discard of the packet 2001. The second timer Tm2 expires at a time t31. In a case where the second timer Tm2 expires, the terminal apparatus 10 discards the packet 2001.

1.11.2. Second Aspect

The terminal apparatus 10 may use only the first timer Tm1, while the first discard processing is activated. In this case, the terminal apparatus 10 may use a discard threshold Dth. The discard threshold Dth is a threshold used for determination of whether to discard data while the first discard processing is activated and is used for the first timer Tm1.

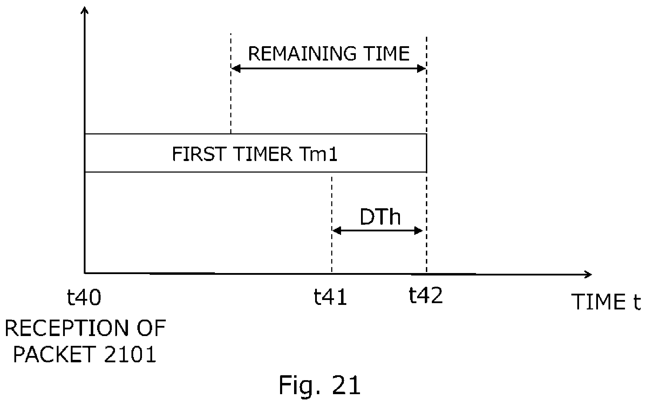

As illustrated in Fig. 21, a PDCP entity of the terminal apparatus 10 receives, at a time t40, a packet 2101 from a higher layer. The terminal apparatus 10 starts the first timer Tm1 from the time t40. The terminal apparatus 10 calculates the remaining time included in the delay information report on the basis of the first timer Tm1. The terminal apparatus 10 includes, in the delay information report, the remaining time calculated based on the first timer Tm1 as the delay information. Meanwhile, the terminal apparatus 10 uses the first timer Tm1 also with respect to discard of the packet 2101. Here, the terminal apparatus 10 uses the discard threshold Dth, while the first discard processing is activated. In a case where the remaining time of the first timer Tm1 becomes below the discard threshold Dth, the terminal apparatus 10 discards the packet 2101. As described above, the discard threshold Dth has a function substantially the same as that of the second timer Tm2.

The discard threshold Dth may be configured in advance in the terminal apparatus 10. In another example, the terminal apparatus 10 may receive the discard threshold Dth from the base station apparatus 20. For example, the base station apparatus 20 may transmit, to the terminal apparatus 10, an RRC message including the discard threshold Dth. The discard threshold Dth may be included in the information element (IE) "PDCP-config" being an example of an RRC IE. In another example, the discard threshold Dth may be included in the first configuration information.

The first aspect and second aspect described above allow possibility of misrecognition by the base station apparatus 20 of the remaining time to be lowered.

2. First Embodiment

Next, a configuration of a first embodiment will be described. Hereinafter, the remaining time calculated based on the first timer Tm1 is referred to as "first remaining time RT1". The remaining time calculated based on the second timer Tm2 is referred to as "second remaining time RT2".

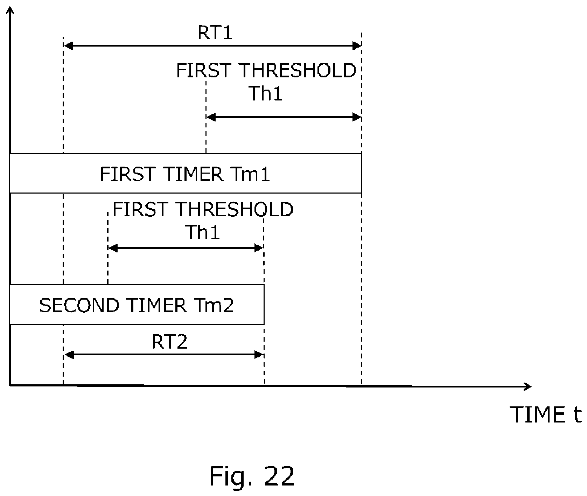

For example, the terminal apparatus 10 triggers the delay information report on the basis of the first threshold Th1. Such triggering processing may fail to trigger the delay information report in an appropriate timing, in the first aspect. As illustrated in Fig. 22, the terminal apparatus 10 calculates the second remaining time RT2 on the basis of the second timer Tm2, while the first discard processing is activated. Then, in a case where the second remaining time RT2 becomes below the first threshold Th1, the terminal apparatus 10 triggers the delay information report. The value of the second timer Tm2 may be smaller than that of the first timer Tm1. Hence, the second remaining time RT2 reaches the first threshold Th1 early, as compared with a case of calculating the first remaining time RT1 by using the first timer Tm1. With this, the terminal apparatus 10 may trigger the delay information report frequently. In other words, the terminal apparatus 10 performs uplink transmission frequently in a situation where congestion occurs, and thus possibility for the congestion to be resolved may be lowered.

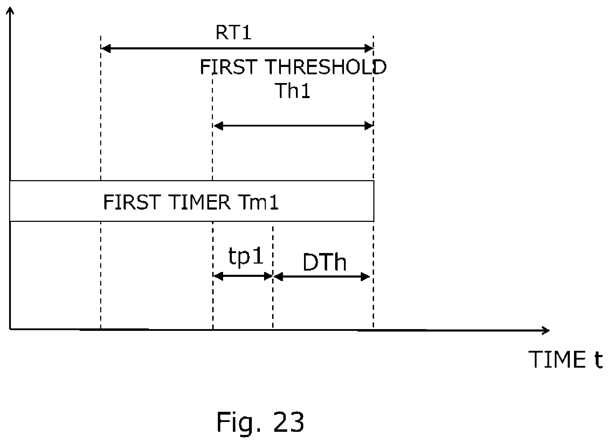

Furthermore, such triggering processing may fail to trigger the delay information report in an appropriate timing, also in the second aspect. As illustrated in Fig. 23, the terminal apparatus 10 calculates the first remaining time RT1 on the basis of the first timer Tm1, while the first discard processing is activated. Then, in a case where the first remaining time RT1 becomes below the first threshold Th1, the terminal apparatus 10 triggers the delay information report. However, a time period tp1 configured between the first threshold Th1 and the discard threshold Dth may be short in some cases. The time period tp1 may be a time period not enough for uplink communication to be re-scheduled after reception by the base station apparatus 20 of the delay information report, causing re-scheduling by the base station apparatus 20 to be not in time.

With this taken into account, in a case where the first discard processing is activated, the terminal apparatus 10 uses a second threshold Th2 different from the first threshold Th1 as a threshold for triggering of the delay information report. In other words, the terminal apparatus 10 triggers the delay information report on the basis of the first threshold Th1 in a case where the first discard processing is not activated (i.e., in the first state) or triggers the delay information report on the basis of the second threshold Th2 in a case where the first discard processing is activated (i.e., in the second state). In other words, based on that the first discard processing is activated, the terminal apparatus 10 switches the threshold for triggering of the delay information report from the first threshold Th1 to the second threshold Th2. In the configuration, the terminal apparatus 10 may transmit the delay information report in accordance with the following procedure.

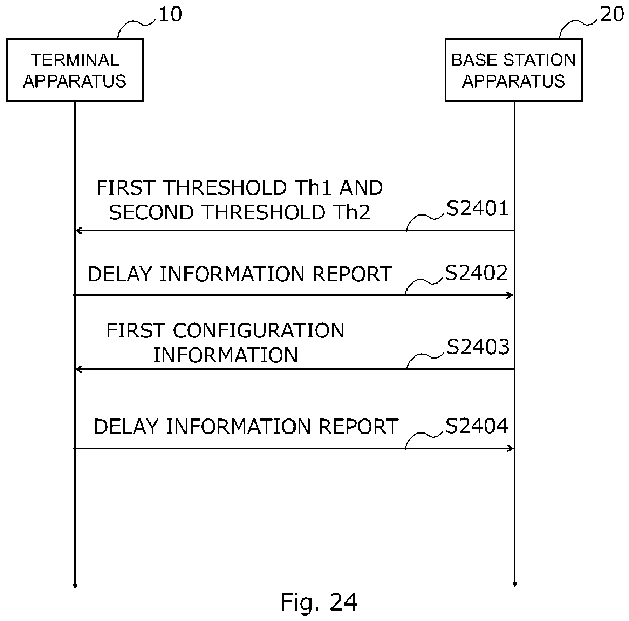

As illustrated in Fig. 24, the communicator 220 of the base station apparatus 20 transmits, to the terminal apparatus 10, information including the first threshold Th1 and second threshold Th2 (S2401). The first threshold Th1 and second threshold Th2 may be configured for an LCH. For example, the first threshold Th1 and second threshold Th2 may be configured as a new element of the IE "LogicalChannelConfig". The first threshold Th1 and second threshold Th2 may be configured for an LCG. For example, the first threshold Th1 and second threshold Th2 may be configured as a new element of the IE "logicalChannelGroup". The first threshold Th1 and second threshold Th2 may be configured for a PDU or PDU set. The first threshold Th1 and second threshold Th2 may be configured for an IE related to the PDU or PDU set included in an RRC message. The first threshold Th1 and second threshold Th2 may be configured for a data burst. The first threshold Th1 and second threshold Th2 may be configured for an IE related to the data burst included in the RRC message. The first threshold Th1 and second threshold Th2 may be configured for the terminal apparatus 10. Note that the base station apparatus 20 may transmit, to the terminal apparatus 10, system information (SI, for example, SIB1 and/or SIB other than SIB1) including the information indicating the first threshold Th1 and second threshold Th2. The base station apparatus 20 may transmit, to the terminal apparatus 10, DCI including the information indicating the first threshold Th1 and second threshold Th2.

The controller 110 of the terminal apparatus 10 triggers the delay information report on the basis of the first threshold Th1. In a case where the first remaining time RT1 is below the first threshold Th1, the controller 110 triggers the delay information report. The communicator 120 of the terminal apparatus 10 transmits the delay information report to the base station apparatus 20 (S2402). Note that, similarly to the configuration described above, the controller 110 may trigger a BSR including the delay information report on the basis of the first threshold Th1.

The communicator 120 receives the first configuration information from the base station apparatus 20 (S2403). The controller 110 activates the first discard processing on the basis of the first configuration information. Furthermore, the controller 110 switches the threshold to use from the first threshold Th1 to the second threshold Th2. Note that the controller 110 keeps the first discard processing activated, until reception of the second configuration information from the base station apparatus 20.

Note that the information indicating the second threshold Th2 may be included in the first configuration information. In other words, the terminal apparatus 10 may receive the information indicating the first threshold Th1 in step S2401 and receive the information indicating the second threshold Th2 in step S2403.

The controller 110 triggers the delay information report on the basis of the second threshold Th2. The communicator 120 transmits the delay information report to the base station apparatus 20 (S2404). Note that, similarly to the configuration described above, the controller 110 may trigger a BSR including the delay information report on the basis of the second threshold Th2.

Next, for each of the first aspect and second aspect, specific processing of triggering the delay information report will be described.

2.1. First Aspect

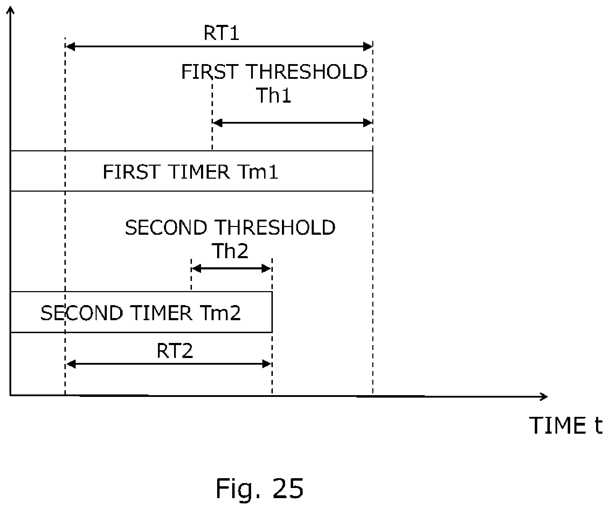

As illustrated in Fig. 25, in a situation where the first discard processing is activated, the controller 110 triggers the delay information report by using the second timer Tm2 and the second threshold Th2. Specifically, in a case where the second remaining time RT2 is below the second threshold Th2, the controller 110 triggers the delay information report. The second threshold Th2 is different from the first threshold Th1. For example, the second threshold Th2 may be smaller than the first threshold Th1. Such a configuration allows the delay information report to be triggered in an appropriate timing. Specifically, a time period until the second remaining time RT2 reaches the second threshold Th2 is long, as compared with a case of using the first threshold Th1 (for example, the example of Fig. 22). Thus, this allows possibility for the terminal apparatus 10 to trigger the delay information report frequently to be lowered. In other words, this can lower possibility for the terminal apparatus 10 to perform uplink transmission frequently in a situation where congestion occurs.

In the present aspect, the controller 110 may use the first timer Tm1 with respect to calculation of the delay information included in the delay information report. The controller 110 may include, in the delay information report, the first remaining time RT1 calculated based on the first timer Tm1 as the delay information.

As described above, the second timer Tm2 may be configured per PSI. For example, the plurality of second timers Tm2-0, ..., Tm2-15 may be respectively configured for the PSI values 0, ..., 15. The plurality of second timers Tm2-0, ..., Tm2-15 may have the respective values different from each other. In this configuration, a plurality of second thresholds Th2-0, ..., Th2-15 may be respectively configured for the PSI values 0, ..., 15. Hereinafter, the subscripts of the second thresholds Th2 each denote the corresponding PSI value. For example, the second threshold Th2-0 is used for the second timer Tm2-0 corresponding to PSI "0".

The plurality of second thresholds Th2-0, ..., Th2-15 may have the respective values different from each other. For example, the smaller the PSI value is (in other words, the relatively higher the importance of data is), the greater the value of the second timer Tm2 may be configured to be. In this case, the smaller the PSI value is, the greater the value of the second threshold Th2 may be configured to be. For example, the value of the second threshold Th2-0 corresponding to PSI "0" may be the greatest. The value of the second threshold Th2-15 corresponding to PSI "15" may be the smallest.

As described above, the second timer Tm2 may be configured per PSI range. For example, the plurality of second timers Tm2-a and Tm2-b may be respectively configured for the first PSI range (for example, 0 to 6) and the second PSI range (for example, 7 to 15). The value of the second timer Tm2-a may be greater than the value of the second timer Tm2-b. In this configuration, a plurality of second thresholds Th2-a and Th2-b may be respectively configured for the first PSI range and the second PSI range. The second threshold Th2-a may be greater than the second threshold Th2-b.

2.2. Second Aspect

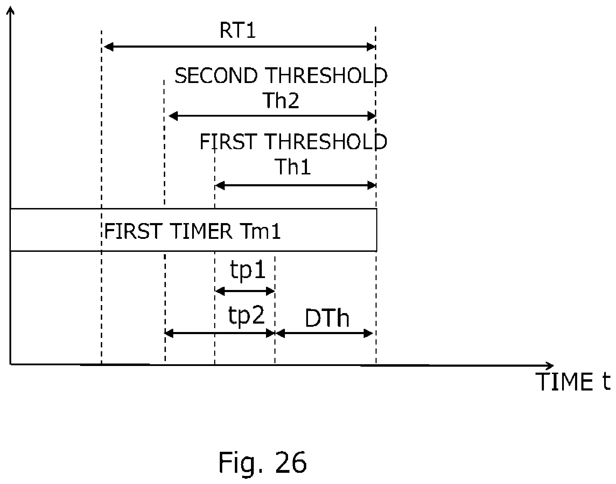

As illustrated in Fig. 26, in a situation where the first discard processing is activated, the controller 110 triggers the delay information report by using the first timer Tm1 and the second threshold Th2. Specifically, in a case where the first remaining time RT1 is below the second threshold Th2, the controller 110 triggers the delay information report. The second threshold Th2 is different from the first threshold Th1. For example, the second threshold Th2 may be greater than the first threshold Th1. Such a configuration allows the delay information report to be triggered in an appropriate timing. Specifically, a time period tp2 configured between the second threshold Th2 and the discard threshold Dth is longer than the time period tp1 for a case of using the first threshold Th1. In other words, a time period from triggering of the delay information report until discard of a packet is long, allowing possibility of re-scheduling by the base station apparatus 20 in time to be raised.

As described above, the plurality of second thresholds Th2-0, ..., Th2-15 may be respectively configured for the PSI values 0, ..., 15. For example, the smaller the PSI value is (in other words, the relatively higher the importance of data is), the greater the value of the second threshold Th2 may be configured to be. With such a configuration, in a case where there is data of relatively high importance, the terminal apparatus 10 can trigger the delay information report earlier. The base station apparatus 20 can perform re-scheduling earlier for data of relatively high importance.

In another example, a plurality of discard thresholds Dth-0, ..., Dth-15 may be respectively configured for the PSI values 0, ..., 15. Hereinafter, the subscripts of the discard thresholds Dth each denote the corresponding PSI value. For example, the discard threshold Dth-0 is used for data associated with PSI "0". The plurality of discard thresholds Dth-0, ..., Dth-15 may have the respective values different from each other. In such a configuration, the plurality of second thresholds Th2-0, ..., Th2-15 may be respectively configured for the PSI values 0, ..., 15. The plurality of second thresholds Th2-0, ..., Th2-15 may be different from each other. For example, the plurality of second thresholds Th2-0, ..., Th2-15 may each be configured such that the time period tp2 allows possibility of re-scheduling by the base station apparatus 20 in time to be raised. In other words, the plurality of second thresholds Th2-0, ..., Th2-15 may each be configured such that the time period tp2 is longer than the time period tp1.

2.3. Alterations

- Alteration 1

The second thresholds Th2 may be calculated on the basis of the first threshold Th1 and offset value(s) for the first threshold Th1. The terminal apparatus 10 may add or subtract the offset value(s) to or from the first threshold Th1 to calculate the second thresholds Th2. The terminal apparatus 10 may be notified of the offset value(s) in a method the same as the notification method of the first threshold Th1. The offset value(s) may be included in the first configuration information.

- Alteration 2

The terminal apparatus 10 may trigger the BSR and/or delay information report when the PSI-based discard processing (including the first discard processing and second discard processing) is activated. In other words, the terminal apparatus 10 may trigger the BSR and/or delay information report on the basis of reception of the first configuration information. In a case where the PSI-based discard processing is activated, data may be discarded, causing a change in the buffer status in the terminal apparatus 10. The terminal apparatus 10 triggers the BSR and/or delay information report upon reception of the first configuration information, thereby allowing the base station apparatus 20 to recognize such a change in the buffer status in the terminal apparatus 10 early.

In this configuration, the terminal apparatus 10 may trigger the BSR and/or delay information report on the basis of a PSI. For example, the first configuration information includes the PSI threshold Pth. At the time point of reception of the first configuration information, the terminal apparatus 10 determines whether data associated with a PSI smaller than the PSI threshold Pth (i.e., data of relatively high importance) is present. In a case where data associated with the PSI smaller than the PSI threshold Pth is present, the terminal apparatus 10 may trigger the BSR and/or delay information report for the data associated with the PSI smaller than the PSI threshold Pth.

Meanwhile, assume that, at the time point of reception of the first configuration information, data associated with a PSI equal to or greater than the PSI threshold Pth (i.e., data of relatively low importance) is present. In this case, for the data associated with the PSI equal to or greater than the PSI threshold Pth, the terminal apparatus 10 need not trigger the BSR and/or delay information report.

- Alteration 3

The terminal apparatus 10 may activate the PSI-based discard processing (including the first discard processing and second discard processing) on the basis of whether at least one of the second timer Tm2, the second threshold Th2, or the discard threshold Dth is configured.

For example, in a case where at least one of the second timer Tm2, the second threshold Th2, or the discard threshold Dth is configured, the terminal apparatus 10 may activate reception of the first configuration information and second configuration information. In other words, in the case where at least one of the second timer Tm2, the second threshold Th2, or the discard threshold Dth is configured, the terminal apparatus 10 may activate the PSI-based discard processing.

In contrast, in a case where none of the second timer Tm2, the second threshold Th2, and the discard threshold Dth is configured, the terminal apparatus 10 need not activate reception of the first configuration information and second configuration information. In other words, in the case where none of the second timer Tm2, the second threshold Th2, and the discard threshold Dth is configured, the terminal apparatus 10 need not activate the PSI-based discard processing.

3. Second Embodiment

Next, a configuration of a second embodiment will be described. Unless there is mutual inconsistency, the configuration of the first embodiment and alterations thereof can be applied to the configuration to be described in this embodiment.

A configuration of a level of the PSI may vary depending on implementation of the terminal apparatus 10 and/or implementation of an application. For example, assume that a first application (for example, remote driving application) of a certain terminal apparatus 10 considers data associated with a PSI value range from 0 to 10 to be of high importance. Meanwhile, assume that a second application (for example, AR related application) of another terminal apparatus 10 considers data associated with a PSI value range from 0 to 5 to be of high importance. As described above, each terminal apparatus 10 and/or each application may have each different reference (i.e., PSI value) that the importance is considered to be high with. Thus, the base station apparatus 20 is not able to recognize how to configure (or activate) the PSI-based discard processing for each terminal apparatus 10 and/or each application. For example, in a case where the first discard processing is activated, the base station apparatus 20 is not able to recognize how to configure the second timer Tm2 and/or second threshold Th2. In a case where the second discard processing is activated, the base station apparatus 20 is not able to recognize how to configure the PSI threshold Pth. In a case where the base station apparatus 20 activates the PSI-based discard processing for all the terminal apparatuses and/or applications similarly, the services may fail to be maintained.

Therefore, in the present embodiment, the terminal apparatus 10 transmits (or reports), to the base station apparatus 20, information related to a preference of the PSI. Hereinafter, the information is referred to as "PSI preference information". The "PSI preference information" includes a preference of a level of the PSI (a preference for configuration of a level of the PSI).

For XR, the terminal apparatus 10 may transmit, to the base station apparatus 20, UE assistance information (UAI) per QoS flow. In this configuration, the terminal apparatus may include, in a UAI message, the PSI preference information.

The UAI message may include uplink assistance information. The uplink assistance information may include at least one of a burst arrival time, an uplink jitter, or an uplink data burst periodicity. In this configuration, the terminal apparatus 10 may include, in the uplink assistance information, the PSI preference information.

Note that the terminal apparatus 10 may transmit the PSI preference information by using a message other than the UAI message or another signaling.

The PSI preference information may be information indicating a level or value or range of the PSI that the terminal apparatus 10 and/or application considers high or low. In another example, the PSI preference information may be information indicating a level or value or range of the PSI that the PSI-based discard processing is to be activated or deactivated for.

The terminal apparatus 10 may transmit, to the base station apparatus 20, the PSI preference information per QoS flow, serving cell, or cell group. In other words, the PSI preference information for a QoS flow, serving cell, or cell group may be transmitted.

The terminal apparatus 10 may acquire or determine a preference of the PSI on the basis of an application installed in the terminal apparatus 10, for example.

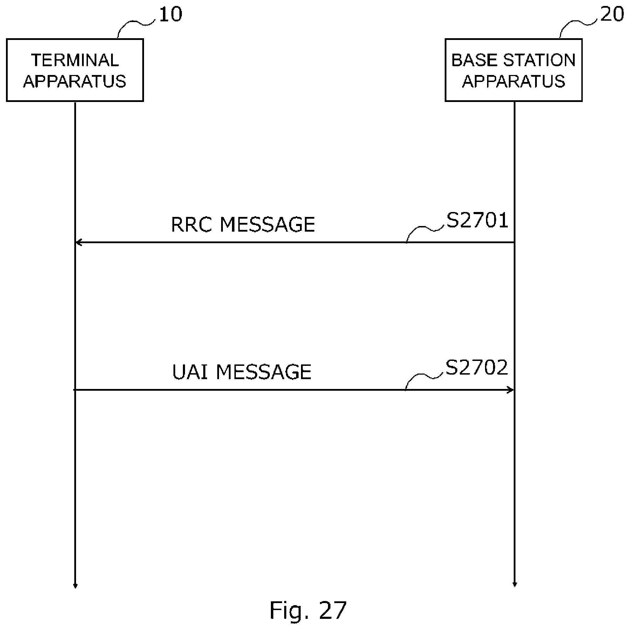

The terminal apparatus 10 may transmit the UAI message in accordance with the following procedure. As illustrated in Fig. 27, the communicator 220 of the base station apparatus 20 transmits, to the terminal apparatus 10, third configuration information related to the UAI (S2701). The third configuration information may be included in an RRC message. The third configuration information may be included in an IE related to a preference of the PSI. The third configuration information may include indication information indicating that the terminal apparatus 10 transmits the PSI preference information. The third configuration information may further include control information for control of transmission of the PSI preference information by the terminal apparatus 10. For example, the control information may include at least one of a duration that the transmission is prohibited for or a periodicity of the transmission. For example, the control information may include information related to a prohibit timer TmP for prohibition on the terminal apparatus 10 from transmitting the PSI preference information.

The controller 110 of the terminal apparatus 10 generates a UAI message including the PSI preference information on the basis of the third configuration information. The UAI message may further include the uplink assistance information. The communicator 120 of the terminal apparatus 10 transmits the UAI message (S2702). Note that the controller 110 may control transmission of the UAI message including the PSI preference information on the basis of the prohibit timer TmP. The controller 110 may transmit the UAI message including the PSI preference information in a case where the prohibit timer TmP is not running.

Such a configuration described above allows the base station apparatus 20 to receive, from the terminal apparatus 10, a preference of the PSI. The base station apparatus 20 can recognize information related to the PSI, regarding uplink communication from the terminal apparatus 10. The base station apparatus 20 may configure a level of the PSI in accordance with the PSI preference information transmitted from the terminal apparatus 10. For example, the base station apparatus 20 may configure a level of the PSI the same level as that in the PSI preference information (for example, a level of the PSI indicated by the PSI preference information) transmitted from the terminal apparatus 10. For example, the base station apparatus 20 can recognize how to configure (or activate) the PSI-based discard processing for each terminal apparatus 10 and/or each application. The base station apparatus 20 may activate the PSI-based discard processing in a manner as described above on the basis of the PSI preference information. The base station apparatus 20 can appropriately perform, for the terminal apparatus 10, configuration related to the PSI-based discard processing.

In another example, the terminal apparatus 10 may transmit the UAI message including the PSI preference information as below. In a case where a certain IE (for example, an IE "otherConfig") included in the RRC message received from the base station apparatus 20 includes an IE related to transmission of a PSI preference (for example, an IE "PSI-PreferenceConfig"), when the IE related to transmission of the PSI preference is a value (for example, setup) indicating transmission of the UAI message including the PSI preference information, the terminal apparatus 10 may consider the terminal apparatus 10 itself configured to provide the UAI message including the PSI preference information. In contrast, when the IE related to transmission of the PSI preference is not the value indicating transmission of the UAI message including the PSI preference information or the IE related to transmission of the PSI preference is not included in the RRC message, the terminal apparatus 10 may consider the terminal apparatus 10 itself configured not to provide the UAI message including the PSI preference information and/or may stop a certain timer Tmx.

In a case where the terminal apparatus 10 is configured to provide the UAI message including the PSI preference information, when condition (b1) or (b2) below is satisfied, the terminal apparatus 10 may configure the certain timer Tmx as the prohibit timer TmP, start the timer Tmx, and initiate transmission of the UAI message including the current PSI preference information.

(b1) The terminal apparatus 10 has a preference related to the PSI and/or the terminal apparatus 10 has not transmitted a UAI message including the preference yet since configured to provide the preference (i.e., PSI preference information).

(b2) The current preference related to the PSI is different from a preference in last transmission of the UAI message including the PSI preference information, and/or the certain timer Tmx (i.e., prohibit timer TmP) is not running.

In a case where transmission of the UAI message including the PSI preference information is initiated, the terminal apparatus 10 may generate a UAI message as below. In a case where the terminal apparatus 10 has a preference related to the PSI, the terminal apparatus 10 may include, in the UAI message, an IE related to the PSI preference (for example, an IE "PSI-Preference") and/or may configure the PSI preference information for the IE. In a case where the terminal apparatus 10 has no preference related to the PSI, the terminal apparatus 10 need not include, in the UAI message, the IE related to the PSI preference described above.

4. Alterations

Although the present disclosure is described according to the embodiments, it is understood that the present disclosure is not limited to the embodiments or the structures. The present disclosure includes various alterations and variations within the equivalent scope. Any other combination including one or more elements included in the embodiments is included in the gist or spirit scope of the present disclosure.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

5. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note A1)

A terminal apparatus (10) comprising:

a controller (110) configured to acquire preference information related to a preference of a protocol data unit set importance (PSI); and
a communicator (120) configured to transmit the preference information to a base station apparatus (20).

(Supplementary Note A2)

The terminal apparatus according to supplementary note A1, wherein
the controller is configured to include, in a user equipment assistance information (UEAssistanceInformation (UAI)) message, the preference information.

(Supplementary Note A3)

The terminal apparatus according to supplementary note A2, wherein
the controller is configured

> to include, in the UAI message, the preference information in a case where the terminal apparatus has the preference, or
> not to include, in the UAI message, the preference information in a case where the terminal apparatus does not have the preference.

(Supplementary Note A4)

The terminal apparatus according to supplementary note A2, wherein

> the UAI message further includes uplink assistance information, and
> the uplink assistance information includes at least one of a burst arrival time, an uplink jitter, or an uplink data burst periodicity.

(Supplementary Note A5)

The terminal apparatus according to supplementary note A4, wherein
the preference information is included in the uplink assistance information.

(Supplementary Note A6)

The terminal apparatus according to supplementary note A1, wherein

> the communicator is configured to receive, from the base station apparatus, configuration information including indication information indicating transmission of the preference information, and
> the controller is configured to determine, on a basis of the indication information, transmission of the preference information.

(Supplementary Note A7)

The terminal apparatus according to any one of supplementary notes A1 to A6, wherein

> the communicator is configured to receive, from the base station apparatus, control information for control of transmission of the preference information, and
> the controller is configured to control, by using the control information, transmission of the preference information.

(Supplementary Note A8)

The terminal apparatus according to supplementary note A7, wherein

> the control information further includes information related to a prohibit timer for prohibition on transmission of the preference information, and
> the controller is configured to control, by using the prohibit timer, transmission of the preference information.

(Supplementary Note A9)

The terminal apparatus according to supplementary note A8, wherein
the controller is configured to initiate, in a case where the terminal apparatus has the preference and has not yet transmitted the preference information, transmission of the preference information and start the prohibit timer.

(Supplementary Note A10)

The terminal apparatus according to supplementary note A8, wherein
the controller is configured to initiate, in a case where a current preference of the PSI is different from a preference in last transmission of the preference information and the prohibit timer is not running, transmission of the preference information and start the prohibit timer.

(Supplementary Note A11)

A method of a terminal apparatus (10), the method comprising:

> acquiring preference information related to a preference of a protocol data unit set importance (PSI); and
> transmitting the preference information to a base station apparatus (20).

(Supplementary Note A12)

A program causing a processor (101) in a terminal apparatus (10) to execute:

> acquiring preference information related to a preference of a protocol data unit set importance (PSI); and
> transmitting the preference information to a base station apparatus (20).

(Supplementary Note A13)

A non-transitory tangible storage medium storing thereon a program causing a processor (101) in a terminal apparatus (10) to execute:

> acquiring preference information related to a preference of a protocol data unit set importance (PSI); and transmitting the preference information to a base station apparatus (20).

(Supplementary Note B1)

A terminal apparatus (10) comprising:

a transmitter (121) configured to transmit, to a base station apparatus (20), a user equipment assistance information (UEAssistanceInformation (UAI)) message including assistance information related to a protocol data unit set importance (PSI) per quality of service (QoS) flow;
a receiver (122) configured to receive, from the base station apparatus, a radio resource control (RRC) message including information for indicating a discard timer used for PSI-based discard processing; and
a controller (110) configured to perform the PSI-based discard processing based on the discard timer.

(Supplementary Note B2)

The terminal apparatus according to supplementary note B1, wherein
the PSI-based discard processing based on the discard timer is configured on a basis of the assistance information related to the PSI.

(Supplementary Note B3)

The terminal apparatus according to supplementary note B1 or B2, wherein
the receiver is configured to receive, from the base station apparatus, an RRC message including information for configuring the terminal apparatus to provide the assistance information related to the PSI.

(Supplementary Note B4)

The terminal apparatus according to any one of supplementary notes B1 to B3, wherein
the receiver is configured to receive, from the base station apparatus, an RRC message including a prohibit timer for controlling transmission of the UAI message including the assistance information related to the PSI.

(Supplementary Note B5)

A method of a terminal apparatus (10), the method comprising:

transmitting, to a base station apparatus (20), a user equipment assistance information (UEAssistanceInformation (UAI)) message including assistance information related to a protocol data unit set importance (PSI) per quality of service (QoS) flow;
receiving, from the base station apparatus, a radio resource control (RRC) message including information for indicating a discard timer used for PSI-based discard processing; and
performing the PSI-based discard processing based on the discard timer.

(Supplementary Note B6)

The method according to supplementary note B5, wherein
the PSI-based discard processing based on the discard timer is configured on a basis of the assistance information related to the PSI.

(Supplementary Note B7)

The method according to supplementary note B5 or B6, further comprising:
receiving, from the base station apparatus, an RRC message including information for configuring the terminal apparatus to provide the assistance information related to the PSI.

(Supplementary Note B8)

The method according to any one of supplementary notes B5 to B7, further comprising:
receiving, from the base station apparatus, an RRC message including a prohibit timer for controlling transmission of the UAI message including the assistance information related to the PSI.

(Supplementary Note B9)

A program causing a processor (101) in a terminal apparatus (10) to execute:

transmitting, to a base station apparatus (20), a user equipment assistance information (UEAssistanceInformation (UAI)) message including assistance information related to a protocol data unit set importance (PSI) per quality of service (QoS) flow;
receiving, from the base station apparatus, a radio resource control (RRC) message including information for indicating a discard timer used for PSI-based discard processing; and
performing the PSI-based discard processing based on the discard timer.

(Supplementary Note B10)

A non-transitory tangible storage medium storing thereon a program causing a processor (101) in a terminal apparatus (10) to execute:

transmitting, to a base station apparatus (20), a user equipment assistance information (UEAssistanceInformation (UAI)) message including assistance information related to a protocol data unit set importance (PSI) per quality of service (QoS) flow;

receiving, from the base station apparatus, a radio resource control (RRC) message including information for indicating a discard timer used for PSI-based discard processing; and

performing the PSI-based discard processing based on the discard timer.

(Supplementary Note B11)

A base station apparatus (20) comprising:

a receiver (222) configured to receive, from a terminal apparatus (10), a user equipment assistance information (UEAssistanceInformation (UAI)) message including assistance information related to a protocol data unit set importance (PSI) per quality of service (QoS) flow; and

a transmitter (221) configured to transmit, to the terminal apparatus, a radio resource control (RRC) message including information for indicating a discard timer used for PSI-based discard processing.

(Supplementary Note B12)

The base station apparatus according to supplementary note B11, further comprising:

a controller (210) configured to configure, for the terminal apparatus, the PSI-based discard processing based on the discard timer on a basis of the assistance information related to the PSI.

(Supplementary Note B13)

The base station apparatus according to supplementary note B11 or B12, wherein

the transmitter is configured to transmit, to the terminal apparatus, an RRC message including information for configuring the terminal apparatus to provide the assistance information related to the PSI.

(Supplementary Note B14)

The base station apparatus according to any one of supplementary notes B11 to B13, wherein

the transmitter is configured to transmit, to the terminal apparatus, an RRC message including a prohibit timer for controlling transmission of the UAI message including the assistance information related to the PSI.

(Supplementary Note B15)

A method of a base station apparatus (20), the method comprising:

receiving, from a terminal apparatus (10), a user equipment assistance information (UEAssistanceInformation (UAI)) message including assistance information related to a protocol data unit set importance (PSI) per quality of service (QoS) flow; and

transmitting, to the terminal apparatus, a radio resource control (RRC) message including information for indicating a discard timer used for PSI-based discard processing.

(Supplementary Note B16)

A program causing a processor (201) in a base station apparatus (20) to execute:

receiving, from a terminal apparatus (10), a user equipment assistance information (UEAssistanceInformation (UAI)) message including assistance information related to a protocol data unit set importance (PSI) per quality of service (QoS) flow; and

transmitting, to the terminal apparatus, a radio resource control (RRC) message including information for indicating a discard timer used for PSI-based discard processing.

(Supplementary Note B17)

A non-transitory tangible storage medium storing thereon a program causing a processor (201) in a base station apparatus (20) to execute:

receiving, from a terminal apparatus (10), a user equipment assistance information (UEAssistanceInformation (UAI)) message including assistance information related to a protocol data unit set importance (PSI) per quality of service (QoS) flow; and

transmitting, to the terminal apparatus, a radio resource control (RRC) message including information for indicating a discard timer used for PSI-based discard processing.

The disclosure contents of the above-mentioned related art documents and reference literature are incorporated herein by reference.

**Claims**

1. A terminal apparatus (10) comprising:

a transmitter (121) configured to transmit, to a base station apparatus (20), a user equipment assistance information (UEAssistanceInformation (UAI)) message including assistance information related to a protocol data unit set importance (PSI) per quality of service (QoS) flow;

a receiver (122) configured to receive, from the base station apparatus, a radio resource control (RRC) message including information for indicating a discard timer used for PSI-based discard processing; and

a controller (110) configured to perform the PSI-based discard processing based on the discard timer.

2. The terminal apparatus according to claim 1, wherein

the PSI-based discard processing based on the discard timer is configured on a basis of the assistance information related to the PSI.

3. The terminal apparatus according to claim 1 or 2, wherein

the receiver is configured to receive, from the base station apparatus, an RRC message including information for configuring the terminal apparatus to provide the assistance information related to the PSI.

4. The terminal apparatus according to any one of claims 1 to 3, wherein

the receiver is configured to receive, from the base station apparatus, an RRC message including a prohibit timer for controlling transmission of the UAI message including the assistance information related to the PSI.

5. A method of a terminal apparatus (10), the method comprising:

transmitting, to a base station apparatus (20), a user equipment assistance information (UEAssistanceInformation (UAI)) message including assistance information related to a protocol data unit set importance (PSI) per quality of service (QoS) flow;

receiving, from the base station apparatus, a radio resource control (RRC) message including information for indicating a discard timer used for PSI-based discard processing; and

performing the PSI-based discard processing based on the discard timer.

6. The method according to claim 5, wherein

the PSI-based discard processing based on the discard timer is configured on a basis of the assistance information related to the PSI.

7. The method according to claim 5 or 6, further comprising:

receiving, from the base station apparatus, an RRC message including information for configuring the terminal apparatus to provide the assistance information related to the PSI.

8. The method according to any one of claims 5 to 7, further comprising:

receiving, from the base station apparatus, an RRC message including a prohibit timer for controlling transmission of the UAI message including the assistance information related to the PSI.

9. A base station apparatus (20) comprising:

a receiver (222) configured to receive, from a terminal apparatus (10), a user equipment assistance information (UEAssistanceInformation (UAI)) message including assistance information related to a protocol data unit set importance (PSI) per quality of service (QoS) flow; and

a transmitter (221) configured to transmit, to the terminal apparatus, a radio resource control (RRC) message including information for indicating a discard timer used for PSI-based discard processing.

10. The base station apparatus according to claim 9, further comprising:

a controller (210) configured to configure, for the terminal apparatus, the PSI-based discard processing based on the discard timer on a basis of the assistance information related to the PSI.

11. The base station apparatus according to claim 9 or 10, wherein

the transmitter is configured to transmit, to the terminal apparatus, an RRC message including information for configuring the terminal apparatus to provide the assistance information related to the PSI.

12. The base station apparatus according to any one of claims 9 to 11, wherein

the transmitter is configured to transmit, to the terminal apparatus, an RRC message including a prohibit timer for controlling transmission of the UAI message including the assistance information related to the PSI.

S

Fig. 1

Fig. 2

Fig. 3

Fig. 4

Fig. 5

20

BASE STATION APPARATUS

201

PROCESSOR

203

NETWORK INTERFACE

TO ANOTHER APPARATUS

205

MEMORY

202

RADIO INTERFACE

204

Fig. 6

Fig. 7

Fig. 8

900 ⌇ | LCG ID | Buffer Size |

910

920

Fig. 9

| | | | | | | | | | | | | | | | |
|---|---|---|---|---|---|---|---|---|---|---|---|---|---|---|---|

1010 — | LCG7 | LCG6 | LCG5 | LCG4 | LCG3 | LCG2 | LCG1 | LCG0 |

1021 — Buffer Size (LCG1)

1022 — Buffer Size (LCG2)

1020

Fig. 10

10

20

TERMINAL
APPARATUS

BASE STATION
APPARATUS

RRC MESSAGE ⟋S1101

DELAY INFORMATION REPORT ⟋S1102

Fig. 11

Fig. 12

| LCG7 | LCG6 | LCG5 | LCG4 | LCG3 | LCG2 | LCG1 | LCG0 |

1210

1221a      1221b

1221

| Buffer Size | Delay Information |

1222a      1222b

1222

| Buffer Size | Delay Information |

1220

1223a      1223b

1223

| Buffer Size | Delay Information |

1200

Fig. 13

| LCG7 | LCG6 | LCG5 | LCG4 | LCG3 | LCG2 | LCG1 | LCG0 |

1210

1220

1410 — Buffer Size

1420 — Delay Information

1200

Fig. 14

1501

FIRST TIMER Tm1

1502

SECOND TIMER Tm2

t0

t1

t2

t4  TIME t

FIRST CONFIGURATION
INFORMATION

SECOND CONFIGURATION
INFORMATION

Fig. 15

1602

PSI(2)

SECOND TIMER
Tm2-2

1501

1601

PSI(1)

FIRST TIMER Tm1

SECOND TIMER
Tm2-1

t0          t1      t2    t3            t4   TIME t

FIRST CONFIGURATION
INFORMATION

SECOND CONFIGURATION
INFORMATION

Fig. 16

Fig. 17

Fig. 18

FIRST CONFIGURATION
INFORMATION

Fig. 19

REMAINING TIME
INCLUDED IN DELAY
INFORMATION REPORT

FIRST TIMER Tm1

SECOND TIMER Tm2

t30

t31    t32

TIME t

RECEPTION OF
PACKET 2001

Fig. 20

REMAINING TIME

FIRST TIMER Tm1

DTh

t40
RECEPTION OF
PACKET 2101

t41    t42

TIME t

Fig. 21

Fig. 22

Fig. 23

10

20

TERMINAL
APPARATUS

BASE STATION
APPARATUS

FIRST THRESHOLD Th1 AND
SECOND THRESHOLD Th2 ⟿S2401

DELAY INFORMATION REPORT ⟿S2402

FIRST CONFIGURATION
INFORMATION ⟿S2403

DELAY INFORMATION REPORT ⟿S2404

Fig. 24

Fig. 25

Fig. 26

10

20

TERMINAL
APPARATUS

BASE STATION
APPARATUS

RRC MESSAGE ⟋S2701

UAI MESSAGE ⟋S2702

Fig. 27

## INTERNATIONAL SEARCH REPORT

| International application No. |
| --- |
| **PCT/JP2024/032569** |

**A. CLASSIFICATION OF SUBJECT MATTER**

*H04W 8/20*(2009.01)i; *H04W 28/24*(2009.01)i; *H04W 72/231*(2023.01)i
FI: H04W8/20; H04W28/24; H04W72/231

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | NEC. Discussion on remaining issues of XR awareness. 3GPP TSG RAN WG2 #123 R2-2307472. 10 August 2023<br>sections 1-2 | 1-12 |
| Y | CATT. Leftover issues on XR awareness. 3GPP TSG RAN WG2 #123 R2-2307346. 11 August 2023<br>sections 1-2 | 1-12 |
| Y | WO 2022/244373 A1 (SONY GROUP CORPORATION) 24 November 2022 (2022-11-24)<br>paragraph [0160] | 3, 7, 11 |

☐ Further documents are listed in the continuation of Box C.　　☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **29 October 2024** | **12 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/032569**

| Patent document cited in search report | Publication date (day/month/year) | Patent family member(s) | Publication date (day/month/year) |
|---|---|---|---|
| WO 2022/244373 A1 | 24 November 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023167838 A

**Non-patent literature cited in the description**

- *3GPP TR 38.838 V17.0.0*, December 2021
- *3GPP TS 26.522 V0.1.0*, May 2023
- *3GPP TR 23.700-60 V1.1.0*, September 2022